# EUROPEAN PATENT APPLICATION

(11) **EP 4 502 832 A1**
(43) Date of publication of application: **05.02.2025**
(21) Application number: 22939930.8
(22) Date of filing: 08.12.2022
(51) Int. Cl.: G06F 21/12, G06F 21/31

(54) **APP DISPLAY METHOD AND DEVICE, AND VEHICLE-MOUNTED TERMINAL**

(30) Priority: 27.04.2022 CN 202210453574
(71) Applicant: Shenzhen Yinwang Intelligent Technologies Co., Ltd., Shenzhen, Guangdong 518129 (CN)
(72) Inventor: HU, Zhonghua, Shenzhen, Guangdong 518129 (CN); YE, Shenghua, Shenzhen, Guangdong 518129 (CN); JIN, Zhou, Shenzhen, Guangdong 518129 (CN)
(74) Representative: Gill Jennings & Every LLP
(86) International application number: PCT/CN2022/137557
(87) International publication number: WO 2023/207116

(57) **Abstract**

This application relates to the field of terminal technologies, and provides an application display method and apparatus, and an in-vehicle terminal, to improve safety of a vehicle in a driving state. The method is applied to a terminal device including a display, and includes: The terminal device displays an identifier of a first object on the display in a travelling process of a vehicle, where the identifier of the object is an identifier of an application or an identifier of a function of an application. The terminal device receives a first operation performed by a user in the vehicle on the identifier of the first object, where the first operation is used to trigger the terminal device to execute a first event, and the first event is starting the first object. The terminal device sends first prompt information, where the first prompt information indicates that the first object is unavailable.

## Description

This application claims priority to Chinese Patent Application No. 202210453574.9, filed with the China National Intellectual Property Administration on April 27, 2022 and entitled "APPLICATION DISPLAY METHOD AND APPARATUS, AND IN-VEHICLE TERMINAL", which is incorporated herein by reference in its entirety.

### TECHNICAL FIELD

This application relates to the field of terminal technologies, and in particular, to an application display method and apparatus, and an in-vehicle terminal.

### BACKGROUND

As main modern means of transportation, vehicles bring convenience to people's work and life, can provide quick and comfortable travel conditions, and are favored by people. In addition, the development of the vehicles is increasingly faster. In one aspect, production continuously increases, and the vehicle manufacturing industry has become an important industry in the world. In another aspect, due to the improvement of science and technology, the vehicles have become electronic and digital.

Currently, to improve vehicle use experience of a user, an in-vehicle terminal is generally configured in a vehicle. The in-vehicle terminal may include a plurality of components such as a display, an audio component, and a camera, and can support the user in implementing human-vehicle interaction through a plurality of means such as the display, a voice, and a gesture. In addition, with the digital development of the vehicle, more types of application software may be installed on the in-vehicle terminal. When controlling the in-vehicle terminal through the foregoing interaction means, the vehicle user can basically achieve same use experience as that of a smartphone.

However, in a travelling process of the vehicle, if a driver excessively uses the application software on the in-vehicle terminal, a safety risk is easily caused. Therefore, a safety mechanism is urgently needed to restrict use of the in-vehicle terminal by the vehicle user, to ensure safe travelling of the vehicle.

### SUMMARY

This application provides an application display method and apparatus, and an in-vehicle terminal, to improve safety of a vehicle.

To achieve the foregoing objective, this application uses the following technical solutions.

According to a first aspect, an application display method is provided. The method includes: A terminal device displays an identifier of a first object in a travelling process of a vehicle, where the identifier of the object is an identifier of an application or an identifier of a function of an application. The terminal device receives a first operation performed by a user in the vehicle on the identifier of the first object, where the first operation is used to trigger the terminal device to execute a first event, and the first event is starting the first object. The terminal device skips responding to the first operation, but sends first prompt information, where the first prompt information indicates that the first object is unavailable.

In the foregoing technical solution, when the vehicle is in the driving state and the user in the vehicle starts an application or a function of an application using the first operation, the terminal device may not perform an action of starting the application or starting the function of the application, or may not open the application or the function of the application, and the terminal device sends prompt information to indicate the user in the vehicle that the application or the function of the application is unavailable. In this way, when the vehicle is in the driving state, the user in the vehicle (for example, a driver) cannot use the application or the function of the application, to avoid a driving safety problem caused by excessive use of the application on the terminal device by the user, and improve interaction between the terminal device and the user by indicating the user that the first object is unavailable, thereby improving user experience.

Optionally, when the first object is already in a starting state before the vehicle is in the driving state, the terminal device may suspend use of the first object or close the first object.

In some embodiments, when the vehicle is in the driving state and the user in the vehicle controls, using a corresponding operation, a function or a component that affects attention of the driver, for example, display brightness or a height of a display, audio volume, or light in the vehicle, the terminal device may not respond to the operation of the user, and send corresponding prompt information.

In a possible implementation of the first aspect, that the terminal device sends first prompt information includes: The terminal device displays the identifier of the first object in a first preset manner, where the first preset manner indicates that the first object is unavailable; the terminal device displays the first prompt information; or the terminal device plays the first prompt information by using a voice. In the foregoing possible implementation, several manners of sending the first prompt information by the terminal device are provided. The manners are simple and effective, and are easy to implement interaction with the user, so that the user knows that use is restricted. This improves user experience.

In a possible implementation of the first aspect, the first object is a first application, and the first application includes a game application, a video playing application, an instant messaging application, or an operation application. In the foregoing possible implementation, when the user in the vehicle starts an application using the first operation, the terminal device may not start the application, but send prompt information to indicate the user in the vehicle that the application is unavailable. In this way, when the vehicle is in the driving state, the user (for example, a driver) in the vehicle cannot use the application, to improve safety of the vehicle.

In a possible implementation of the first aspect, the first object is a first function of a first application, and the first function includes a video call function, a dynamic display function, a character input function, a search function, or a pop-up display function. In the foregoing possible implementation, when the user in the vehicle starts a function of an application using the first operation, the terminal device may not start the function, but send prompt information to indicate the user in the vehicle that the function is unavailable. In this way, when the vehicle is in the driving state, the user (for example, a driver) in the vehicle cannot use the function, to improve safety of the vehicle.

In a possible implementation of the first aspect, the terminal device further displays an identifier of a second object, and the method further includes: receiving a second operation performed by the user on the identifier of the second object, where the second operation is used to trigger the terminal device to execute a second event, and the second event is starting the second object. The terminal device responds to the second operation in a voice mode. In the foregoing possible implementation, when the vehicle is in the driving state and the user in the vehicle starts an application or a function of an application using the second operation, the terminal device responds to the second operation in the voice mode. In this way, when the vehicle is in the driving state, the user (for example, a driver) in the vehicle does not need to distract much attention when using the application or the function of the application, to avoid a driving safety problem caused by using the application on the terminal device by the user.

In a possible implementation of the first aspect, the method further includes: The terminal device sends second prompt information, where the second prompt information indicates that the second object operates in the voice mode. In the foregoing implementation, when the vehicle is in the driving state and the user in the vehicle starts the application or the function of the application on the terminal device, the terminal device responds to the second operation in the voice mode, and sends prompt information to indicate the user in the vehicle that the application or the function of the application operates in the voice mode. This can improve user experience when driving safety is ensured.

In a possible implementation of the first aspect, that the terminal device sends second prompt information includes: The terminal device displays the identifier of the second object in a second preset manner, where the second preset manner indicates that the second event is executed in the voice mode; the terminal device displays the second prompt information on a display; or the terminal device plays the second prompt information by using a voice. In the foregoing possible implementation, several manners of sending the second prompt information by the terminal device are provided. The manners are simple and effective, and are easy to implement interaction with the user, so that the user knows that use is restricted. This improves user experience.

In a possible implementation of the first aspect, the second object is a second application, and the second application includes a video playing application, an instant messaging application, an operation application, or a reading application. In this way, when the vehicle is in the driving state, the user (for example, a driver) in the vehicle does not need to distract much attention when using the application, to avoid a driving safety problem caused by using the application on the terminal device by the user.

In a possible implementation of the first aspect, the second application is a second function of a second application, and the second function includes a video call function, a dynamic display function, a character input function, or a search function. In this way, when the vehicle is in the driving state, the user (for example, a driver) in the vehicle does not need to distract much attention when using a function of the application, to avoid a driving safety problem caused by using the application on the terminal device by the user.

In a possible implementation of the first aspect, that the terminal device skips responding to the first operation includes: when the terminal device determines that the user is a user in a driver seat and/or a user in a front passenger seat, the terminal device skips responding to the first operation. To be specific, for a same application or a same function of a same application, the terminal device may not respond to an operation of a user in a specified seat, but respond to an operation of a user in a non-specified seat. In other words, for a same application or a same function of a same application, users at different seats have different use permission.

In a possible implementation of the first aspect, that the terminal device skips responding to the first operation includes: when the terminal device determines that a display area in which the identifier of the first object is located is close to or opposite to the driver seat, the terminal device skips responding to the first operation. To be specific, in a scenario in which the display includes a plurality of display areas, the terminal device may not respond to an operation of the user on an application or a function of an application displayed in a specified display area, but respond to an operation of the user on a same application or different applications in a non-specified display area, or respond to an operation of the user on a same function or different functions of a same application in a non-specified display area. In other words, for a same application or different applications in different display areas, use permission of a same user may be different, and for a same function or different functions of a same application in different display areas, use permission of a same user may be different.

In a possible implementation of the first aspect, that the terminal device skips responding to the first operation includes: when the terminal device determines that a display on which the identifier of the first object is located is a preset display, the terminal device skips responding to the first operation. To be specific, in a scenario in which there are a plurality of displays, the terminal device may not respond to an operation performed by the user on an application or a function of an application displayed on a specified display, but respond to an operation performed by the user on an application or a function of an application displayed on a non-specified display. In other words, a same user has different use permission for applications or functions of applications displayed on different displays.

In a possible implementation of the first aspect, that the terminal device skips responding to the first operation includes: when the terminal device determines that status information of the vehicle meets a first preset condition, the terminal device skips responding to the first operation. Optionally, in different states of the vehicle, ranges of applications that the terminal device does not respond to may be different, and ranges of different functions that are of a same application and that the terminal device does not respond to may also be different. To be specific, for different states of the vehicle, use permission of a same application on the terminal device may be different, use permission of different applications may be different, use permission of a same function of a same application may be different, and use permission of different functions of a same application may be different.

In a possible implementation of the first aspect, that the terminal device responds to the second operation in a voice mode includes: when the terminal device determines that the user is a user in a driver seat and/or a user in a front passenger seat, the terminal device responds to the second operation in the voice mode. To be specific, for a same application or a same function of a same application, the terminal device may respond to an operation of a user in a specified seat in a voice mode, but normally respond to an operation of a user in a non-specified seat. In other words, for a same application or a same function of a same application, users at different seats have different use permission.

In a possible implementation of the first aspect, that the terminal device responds to the second operation in a voice mode includes: when the terminal device determines that a display area in which the identifier of the second object is located is close to or opposite to the driver seat, the terminal device responds to the second operation in the voice mode. To be specific, in a scenario in which the display includes a plurality of display areas, the terminal device may respond to an operation of the user on an application or a function of an application displayed in a specified display area in a voice mode, but normally respond to an operation of the user on a same application or different applications in a non-specified display area, or respond to an operation of the user on a same function or different functions of a same application in a non-specified display area. In other words, for a same application or different applications in different display areas, use permission of a same user may be different, and for a same function or different functions of a same application in different display areas, use permission of a same user may be different.

In a possible implementation of the first aspect, that the terminal device responds to the second operation in a voice mode includes: when the terminal device determines that a display on which the identifier of the second object is located is a preset display, the terminal device responds to the second operation in the voice mode. Optionally, the preset display is a projection display. To be specific, in a scenario in which there are a plurality of displays, the terminal device may respond to an operation performed by the user on an application or a function of an application displayed on a specified display in a voice mode, but normally respond to an operation performed by the user on an application or a function of an application displayed on a non-specified display. In other words, a same user has different use permission for applications or functions of applications displayed on different displays.

In a possible implementation of the first aspect, that the terminal device responds to the second operation in a voice mode includes: when the terminal device determines that status information of the vehicle meets a second preset condition, the terminal device responds to the second operation in the voice mode. Optionally, the status information of the vehicle includes at least one of the following information: speed information, gear information, power supply information, and safety information. Optionally, in different states of the vehicle, ranges of applications that the terminal device responds to in a voice mode may be different, and ranges of different functions that are of a same application and that the terminal device normally responds to may also be different. To be specific, for different states of the vehicle, use permission of a same application on the terminal device may be different, use permission of different applications may be different, use permission of a same function of a same application may be different, and use permission of different functions of a same application may be different.

In a possible implementation of the first aspect, the terminal device further displays an identifier of a third object, and the method further includes: receiving a third operation performed by the user on the identifier of the third object, where the third operation is used to trigger the terminal device to execute a third event, and the third event is starting the third object. The terminal device responds to the third operation.

In a possible implementation of the first aspect, the third object is a third application, and the third application includes an audio playing application, a navigation application, a time or event reminder application, or a system application.

In a possible implementation of the first aspect, the third object is a third function of a third application, and the third function includes a static display function or an audio playing function.

In a possible implementation of the first aspect, the terminal device includes a processor and at least two displays, and the processor is configured to control the at least two displays. In the foregoing possible implementation, the at least two displays in the terminal device may be controlled by a same processor, or may be controlled by different processors.

According to a second aspect, an application display apparatus is provided. The apparatus includes: a display unit, configured to display an identifier of a first object in a travelling process of a vehicle, where the identifier of the object is an identifier of an application or an identifier of a function of an application; a receiving unit, configured to receive a first operation performed by a user in the vehicle on the identifier of the first object, where the first operation is used to trigger a terminal device to execute a first event, and the first event is starting the first object; and an output unit, configured to send first prompt information, where the first prompt information indicates that the first object is unavailable.

In a possible implementation of the second aspect, the display unit is further configured to display the identifier of the first object in a first preset manner, where the first preset manner indicates that the first object is unavailable; the display unit is further configured to display the first prompt information; or the output unit is further configured to play the first prompt information by using a voice.

In a possible implementation of the second aspect, the first object is a first application, and the first application includes a game application, a video playing application, an instant messaging application, or an operation application

In a possible implementation of the second aspect, the first object is a first function of a first application, and the first function includes a video call function, a dynamic display function, a character input function, a search function, or a pop-up display function.

In a possible implementation of the second aspect, the display unit is further configured to display an identifier of a second object; the receiving unit is further configured to receive a second operation performed by the user on the identifier of the second object, where the second operation is used to trigger the terminal device to execute a second event, and the second event is starting the second object; and the display unit is further configured to respond to the second operation in a voice mode.

In a possible implementation of the second aspect, the apparatus further includes: the output unit, configured to send second prompt information, where the second prompt information indicates that the second object operates in the voice mode.

In a possible implementation of the second aspect, the display unit is further configured to display the identifier of the second object in a second preset manner, where the second preset manner indicates that the second event is executed in the voice mode; or the display unit is further configured to display the second prompt information; or the output unit is further configured to play the second prompt information by using a voice.

In a possible implementation of the second aspect, the second object is a second application, and the second application includes a video playing application, an instant messaging application, an operation application, or a reading application

In a possible implementation of the second aspect, the second application is a second function of a second application, and the second function includes a video call function, a dynamic display function, a character input function, or a search function.

In a possible implementation of the second aspect, the display unit is further configured to: when the user is a user in a driver seat and/or a user in a front passenger seat, skip responding to the first operation; and/or when a display area in which the identifier of the first object is located is close to or opposite to the driver seat, skip responding to the first operation; and/or when the display unit is a preset display, skip responding to the first operation; and/or when status information of the vehicle meets a first preset condition, skip responding to the first operation.

In a possible implementation of the second aspect, the display unit is further configured to: when the user is a user in a driver seat and/or a user in a front passenger seat, respond to the second operation in the voice mode; and/or when a display area in which the identifier of the second object is located is close to or opposite to the driver seat, respond to the second operation in the voice mode; and/or when the display unit is a preset display, respond to the second operation in the voice mode; and/or when status information of the vehicle meets a second preset condition, respond to the second operation in the voice mode. Optionally, the preset display is a projection display. The status information of the vehicle includes at least one of the following information: speed information, gear information, power supply information, and safety information.

In a possible implementation of the second aspect, the display unit is further configured to display an identifier of a third object; the receiving unit is further configured to receive a third operation performed by the user on the identifier of the third object, where the third operation is used to trigger the terminal device to execute a third event, and the third event is starting the third object; and the display unit is further configured to respond to the third operation.

In a possible implementation of the second aspect, the third object is a third application, and the third application includes an audio playing application, a navigation application, a time or event reminder application, or a system application.

In a possible implementation of the second aspect, the third object is a third function of a third application, and the third function includes a static display function or an audio playing function.

In a possible implementation of the second aspect, the apparatus includes a processor, the display unit includes at least two displays, and the processor is configured to control the at least two displays.

According to a third aspect, an application control method is provided, applied to an in-vehicle terminal. The method includes: determining an application control strategy based on status information of a vehicle, where the application control strategy includes a plurality of disabled events, and each of the plurality of disabled events is used to indicate one application and one head unit service of the application; obtaining a target event triggered by a user, where the target event is used to indicate a target application and a target head unit service of the target application; and when the target event belongs to the plurality of disabled events, forbidding execution of the target event.

In the foregoing technical solution, the plurality of disabled events are generated based on the status information of the vehicle, and each disabled event corresponds to one application and one head unit service of the application. In other words, an event that includes an application and a different head unit service of the application in the in-vehicle terminal is used as a granularity to manage and control use of the in-vehicle terminal. In this way, when a driver triggers a disabled event, execution of the disabled event can be prevented. This can improve accuracy of management and control and ensuring safety in a driving process of the vehicle.

In a possible implementation of the third aspect, when the target event belongs to the plurality of disabled events, the method further includes: outputting prompt information, where the prompt information indicates the user that execution of the target event is forbidden.

In a possible implementation of the third aspect, at least one head unit service is a dynamic display service. Optionally, the at least one head unit service includes at least one of the following: scrolling display, video playing, keyboard display, and pop-up display.

In a possible implementation of the third aspect, the in-vehicle terminal has a plurality of system windows, and each system window displays one or more applications. Each of the plurality of disabled events is further used to indicate a system window in which the application is located, and the target event is further used to indicate a target system window in which the target application is located. Optionally, display positions of the plurality of system windows are fixed.

In a possible implementation of the third aspect, the in-vehicle terminal has a plurality of display areas, and positions of the plurality of system windows in the plurality of display areas are not fixed. Each of the plurality of disabled events is further used to indicate a display-forbidden area of a system window in which the application is located, and the target event is further used to indicate a display area in which the target system window is located.

In a possible implementation of the third aspect, the determining an application control strategy based on status information of a vehicle includes: obtaining the status information of the vehicle and configuration information, where the configuration information indicates at least one of the following: at least one head unit service, at least one system window, and at least one display-forbidden area; and generating the application control strategy based on the status information of the vehicle, the configuration information, and a plurality of applications installed on the in-vehicle terminal.

In a possible implementation of the third aspect, the status information of the vehicle includes at least one of the following: speed information, gear information, power supply information, and safety information.

According to a fourth aspect, an application control method is provided, applied to an in-vehicle terminal. The in-vehicle terminal has a plurality of system windows, and one or more applications are installed in each system window. The method includes: determining an application control strategy based on status information of a vehicle, where the application control strategy includes a plurality of disabled events, and each of the plurality of disabled events is used to indicate one application and a system window in which the application is located; obtaining a target event triggered by a user, where the target event is used to indicate a target application and a target system window in which the target application is located; and when the target event belongs to the plurality of disabled events, forbidding execution of the target event. Optionally, display positions of the plurality of system windows are fixed.

In the foregoing technical solution, positions of some system windows are close to a driver, and positions of some system windows are far away from the driver. An event including an application, a head service unit of the application, and a system window in which the application is located is used as a granularity to manage and control an application function in the system window close to the driver, so that use of the in-vehicle terminal by another user in the vehicle is not affected while safe driving of the vehicle is ensured.

In a possible implementation of the fourth aspect, the in-vehicle terminal has a plurality of display areas, and positions of the plurality of system windows in the plurality of display areas are not fixed. Each of the plurality of disabled events is further used to indicate a display-forbidden area of a system window in which the application is located, and the target event is further used to indicate a display area in which the target system window is located.

In a possible implementation of the fourth aspect, the determining an application control strategy based on status information of a vehicle includes: obtaining the status information of the vehicle and configuration information, where the configuration information indicates at least one of the following: at least one system window and at least one display-forbidden area; and generating the application control strategy based on the status information of the vehicle, the configuration information, and a plurality of applications installed on the in-vehicle terminal.

In a possible implementation of the fourth aspect, the status information of the vehicle includes at least one of the following: speed information, gear information, power supply information, and safety information.

In a possible implementation of the fourth aspect, when the target event belongs to the plurality of disabled events, the method further includes: outputting prompt information, where the prompt information indicates the user that execution of the target event is forbidden.

According to a fifth aspect, an application control apparatus is provided, applied to an in-vehicle terminal. The apparatus includes: a processing unit, configured to determine an application control strategy based on status information of a vehicle, where the application control strategy includes a plurality of disabled events, and each of the plurality of disabled events is used to indicate one application and one head unit service of the application; an obtaining unit, configured to obtain a target event triggered by a user, where the target event is used to indicate a target application and a target head unit service of the target application; and a processing unit, further configured to: when the target event belongs to the plurality of disabled events, forbid execution of the target event.

In a possible implementation of the fifth aspect, when the target event belongs to the plurality of disabled events, the apparatus further includes: an output unit, configured to output prompt information, where the prompt information indicates the user that execution of the target event is forbidden.

In a possible implementation of the fifth aspect, at least one head unit service is a dynamic display service. Optionally, the at least one head unit service includes at least one of the following: scrolling display, video playing, keyboard display, and pop-up display.

In a possible implementation of the fifth aspect, the in-vehicle terminal has a plurality of system windows, and each system window displays one or more applications. Each of the plurality of disabled events is further used to indicate a system window in which the application is located, and the target event is further used to indicate a target system window in which the target application is located. Optionally, display positions of the plurality of system windows are fixed.

In a possible implementation of the fifth aspect, the in-vehicle terminal has a plurality of display areas, and positions of the plurality of system windows in the plurality of display areas are not fixed. Each of the plurality of disabled events is further used to indicate a display-forbidden area of a system window in which the application is located, and the target event is further used to indicate a display area in which the target system window is located.

In a possible implementation of the fifth aspect, the obtaining unit is further configured to obtain the status information of the vehicle and configuration information, where the configuration information indicates at least one of the following: at least one head unit service, at least one system window, and at least one display-forbidden area. The processing unit is further configured to generate the application control strategy based on the status information of the vehicle, the configuration information, and a plurality of applications installed on the in-vehicle terminal.

In a possible implementation of the fifth aspect, the status information of the vehicle includes at least one of the following: speed information, gear information, power supply information, and safety information.

According to a sixth aspect, an application control apparatus is provided, applied to an in-vehicle terminal. The in-vehicle terminal has a plurality of system windows, and one or more applications are installed in each system window. The apparatus includes: a processing unit, configured to determine an application control strategy based on status information of a vehicle, where the application control strategy includes a plurality of disabled events, and each of the plurality of disabled events is used to indicate one application and a system window in which the application is located; an obtaining unit, configured to obtain a target event triggered by a user, where the target event is used to indicate a target application and a target system window in which the target application is located; a processing unit, further configured to: when the target event belongs to the plurality of disabled events, forbid execution of the target event. Optionally, display positions of the plurality of system windows are fixed.

In a possible implementation of the sixth aspect, the in-vehicle terminal has a plurality of display areas, and positions of the plurality of system windows in the plurality of display areas are not fixed. Each of the plurality of disabled events is further used to indicate a display-forbidden area of a system window in which the application is located, and the target event is further used to indicate a display area in which the target system window is located.

In a possible implementation of the sixth aspect, the obtaining unit is further configured to obtain the status information of the vehicle and configuration information, where the configuration information indicates at least one of the following: at least one system window and at least one display-forbidden area. The processing unit is further configured to generate the application control strategy based on the status information of the vehicle, the configuration information, and a plurality of applications installed on the in-vehicle terminal.

In a possible implementation of the sixth aspect, the status information of the vehicle includes at least one of the following: speed information, gear information, power supply information, and safety information.

In a possible implementation of the sixth aspect, when the target event belongs to the plurality of disabled events, the apparatus further includes: an output unit, configured to output prompt information, where the prompt information indicates the user that execution of the target event is forbidden.

According to another aspect of this application, a chip system is provided. The chip system includes at least one processor and at least one interface circuit. The at least one interface circuit is configured to perform receiving and sending functions, and send instructions to the at least one processor. When the at least one processor executes the instructions, the at least one processor performs the method provided in any one of the foregoing aspects or possible implementations.

According to another aspect of this application, a terminal device is provided. The terminal device includes a processor and a memory. The memory stores instructions. When the instructions are run on the processor, the terminal device is enabled to perform the method provided in any one of the foregoing aspects or possible implementations.

According to another aspect of this application, an in-vehicle terminal is provided. The in-vehicle terminal includes a processor and a display. The processor is configured to control the display to perform the method provided in any one of the foregoing aspects or possible implementations.

According to another aspect of this application, a computer-readable storage medium is provided. The computer-readable storage medium stores a computer program or instructions. When the computer program or the instructions are run, the method provided in any one of the foregoing aspects or possible implementations is implemented.

According to another aspect of this application, a computer program product is provided. The computer program product includes a computer program (which may also be referred to as code or instructions). When the computer program is run, a computer is enabled to perform the method provided in any one of the foregoing aspects or possible implementations.

It may be understood that, for beneficial effect that can be achieved by any one of the application display apparatus, the application control apparatus, the terminal device, the in-vehicle terminal, the computer-readable storage medium, and the computer program product provided above, refer to beneficial effect in the application display method provided above. To be specific, when the vehicle is in the driving state and the user in the vehicle starts the application or the function of the application using the operation, the terminal device does not perform the action of starting the application or starting the function of the application, but indicates, using the prompt information, the user that the application or the function of the application is unavailable. In this way, the user (for example, the driver) in the vehicle cannot use the application or the function of the application, to avoid the driving safety problem caused by excessive use of the application on the terminal device by the user.

### BRIEF DESCRIPTION OF DRAWINGS

FIG. 1 is a diagram of a structure of a terminal device according to an embodiment of this application;
FIG. 2A to FIG. 2D are diagrams of a display in a vehicle according to an embodiment of this application;
FIG. 3 is a diagram of a software architecture of a terminal device according to an embodiment of this application;
FIG. 4 is a schematic flowchart of an application display method according to an embodiment of this application;
FIG. 5 is a diagram of an application display interface according to an embodiment of this application;
FIG. 6 is a diagram of another application display interface according to an embodiment of this application;
FIG. 7 is a diagram of still another application display interface according to an embodiment of this application;
FIG. 8 is a diagram of another application display interface according to an embodiment of this application;
FIG. 9 is a diagram of still another application display interface according to an embodiment of this application;
FIG. 10A to FIG. 10C are a diagram of another application display interface according to an embodiment of this application;
FIG. 11 is a diagram of still another application display interface according to an embodiment of this application;
FIG. 12 is a diagram of another application display interface according to an embodiment of this application;
FIG. 13A to FIG. 13C are a diagram of still another application display interface according to an embodiment of this application;
FIG. 14 is a schematic flowchart of another application display method according to an embodiment of this application;
FIG. 15(a) to FIG. 15(d) are a diagram of another application display interface according to an embodiment of this application;
FIG. 16(a) to FIG. 16(c) are a diagram of still another application display interface according to an embodiment of this application;
FIG. 17(a) to FIG. 17(c) are a diagram of another application display interface according to an embodiment of this application;
FIG. 18 is a diagram of still another application display interface according to an embodiment of this application;
FIG. 19 is a schematic flowchart of an application control method according to an embodiment of this application;
FIG. 20 is a diagram of a structure of an application display apparatus according to an embodiment of this application; and
FIG. 21 is a diagram of a structure of an application control apparatus according to an embodiment of this application.

### DESCRIPTION OF EMBODIMENTS

The following describes the technical solutions in embodiments of this application with reference to the accompanying drawings in embodiments of this application. In this application, "at least one" refers to one or more, and "a plurality of" refers to two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

It should be noted that, in this application, words "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

With the development of terminal technologies, a vehicle can implement more and more functions. Currently, to improve vehicle use experience of a user, an in-vehicle terminal (for example, a head unit or in-vehicle infotainment system) is generally configured in the user. The in-vehicle terminal may include a plurality of components such as a display, a microphone, and a camera, and can support the user in implementing human-vehicle interaction through a plurality of means such as the display, a voice, and a gesture. In addition, with the digital development of the vehicle, more types of application software may be installed on the in-vehicle terminal. The application software may include a system application and a third-party application. When controlling the in-vehicle terminal through the foregoing interaction means, the vehicle user can basically achieve same use experience as that of a smartphone. However, when the vehicle is in a driving state, if a driver excessively uses the application software on the in-vehicle terminal, a safety risk is easily caused.

Based on this, embodiments of this application provide an application display method and an application control method, to control, when a vehicle is in a driving state and based on information, for example, a vehicle status, a display position, and a user position, displaying of one or more application software or function use permission of application software that affects user attention, so that application software or a function of application software cannot be used, and further driving safety is ensured.

Before the technical solutions of this application are described below, a terminal device configured to display and control an application in embodiments of this application is first described.

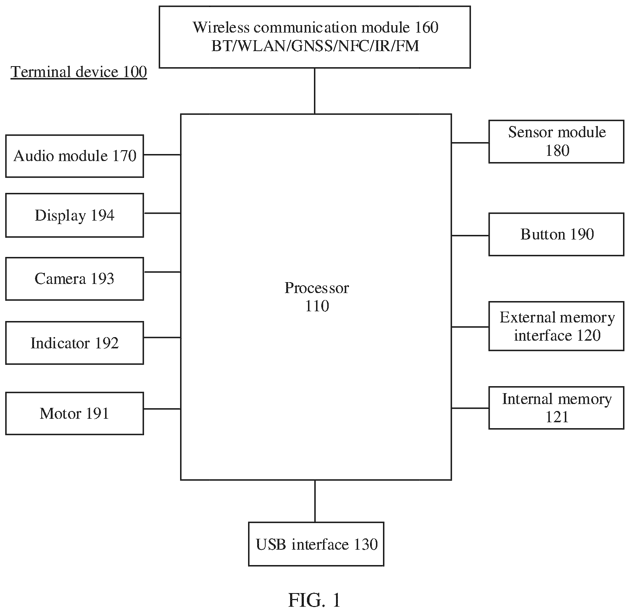

FIG. 1 is a diagram of a structure of a terminal device 100 according to an embodiment of this application. The terminal device 100 may be a vehicle, an automobile, an in-vehicle terminal, another terminal configured to control a vehicle, or the like. As shown in FIG. 1, the terminal device 100 may include a processor 110, an external memory interface 120, an internal memory 121, a universal serial bus (universal serial bus, USB) interface 130, a wireless communication module 160, an audio module 170, a sensor module 180, a button 190, a motor 191, an indicator 192, a camera 193, a display 194, and the like.

It can be understood that the structure illustrated in embodiments of this application does not constitute a specific limitation on the terminal device 100. In some other embodiments of this application, the terminal device 100 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect to the processor 110 and a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display 194 through the DSI interface, to implement a display function of the terminal device 100.

The USB interface 130 is an interface that conforms to a USB standard specification, and may be specifically a mini USB interface, a micro USB interface, a USB type-C interface, or the like. The USB interface 130 may be used to connect to a charger to charge the terminal device 100, or may be used to transmit data between the terminal device 100 and a peripheral device, or may be configured to connect to a headset for playing audio through the headset. This interface may further be configured to connect to another terminal device, for example, an augmented reality (augmented reality, AR) device.

It can be understood that an interface connection relationship between the modules shown in embodiments of this application is merely an example for description, and constitutes no limitation on the structure of the terminal device 100. In some other embodiments of this application, different interface connection manners in the foregoing embodiments or a combination of a plurality of interface connection manners may alternatively be used for the terminal device 100.

A wireless communication function of the terminal device 100 may be implemented through an antenna, the wireless communication module 160, the modem processor, the baseband processor, and the like.

The antenna is configured to transmit and receive electromagnetic wave signals. Each antenna in the terminal device 100 may be configured to cover one or more communication frequency bands. Different antennas may be further multiplexed, to improve antenna utilization. For example, the antenna may be multiplexed as a diversity antenna in a wireless local area network. In some other embodiments, the antenna may be used in combination with a tuning switch.

The wireless communication module 160 may provide a solution applied to the terminal device 100 for wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna.

In some embodiments, the terminal device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The terminal device 100 implements a display function via the GPU, the display 194, the application processor, and the like. The GPU is a microprocessor for image processing, and is connected to the display 194 and the application processor. The GPU is configured to perform mathematical and geometrical calculation, and is configured to render an image. The processor 110 may include one or more GPUs that execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light emitting diode (active-matrix organic light-emitting diode, AMOLED), a flexible light-emitting diode (flex light-emitting diode, FLED), a mini-LED, a micro-LED, a micro-OLED, or quantum dot light-emitting diodes (quantum dot light-emitting diodes, QLED). In this application, the terminal device 100 may include one or N displays 194, where N is a positive integer greater than 1.

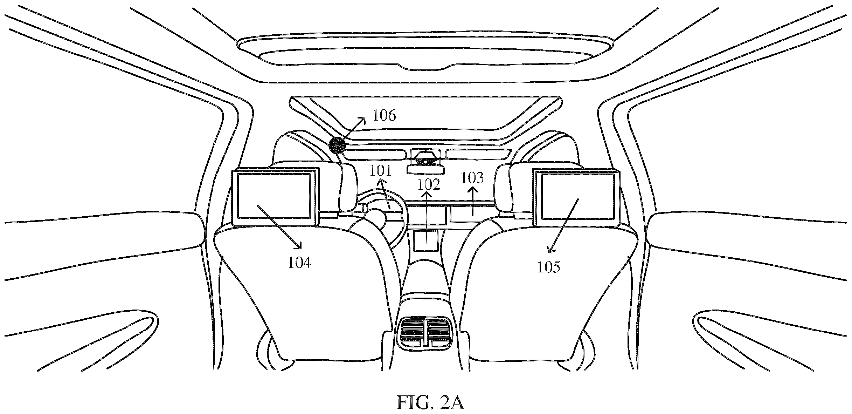

In some embodiments, the display 194 includes an in-vehicle display. The in-vehicle display is a physical display, and is an important component of an in-vehicle infotainment system. For example, as shown in FIG. 2A, a plurality of displays are disposed in a vehicle cabin, for example, a digital dashboard display 101, a center console screen 102, a display 103 in front of a passenger in a front passenger seat (also referred to as a passenger in a front seat), a display 104 in front of a passenger in a rear-left seat, and a display 105 in front of a passenger in a rear-right seat. Even a vehicle window may be used as a display for display.

In some other embodiments, the display 194 may further include a projection display. For example, the projection display may be a head-up display (head-up display, HUD). The head-up display is also referred to as a head-up display, and is mainly configured to display driving information such as a speed and navigation on a display device (for example, a windshield) in front of a driver, to reduce line-of-sight transfer time of the driver, avoid a pupil change caused by line-of-sight transfer of the driver, and improve travelling safety and comfort. An HUD technology is a kind of technology evolved from a reflector sight, and this kind of technology is originally mainly used in military application fields such as aviation aircraft, fighter aircraft, flight instrument. In recent years, the HUD technology has developed into the vehicle industry. The significance of the HUD technology in the vehicle field is as follows. First, driving safety is improved. During normal driving, human eyes need to switch between a road and a dashboard, which easily leads to visual fatigue and attention distraction. The introduction of the HUD technology allows the driver to obtain driving information without taking eyes off the road: The driver needs to look down 5° to 10° to view information on the HUD, while 20° to 25° to view information on the dashboard. Second, human-machine interaction experience is improved, for example, display effect of navigation is increased, and an augmented reality head-up display system (augmented reality HUD, AR-HUD) may bring real-world navigation experience. The information displayed on the HUD may include all or some information (for example, a status of a vehicle, such as a vehicle speed, a rotational speed, a mileage, and a fuel capacity or a state of charge) displayed on a conventional dashboard, and may further include external information, such as all or some navigation information in conventional two-dimensional navigation. In addition, the information may further include other auxiliary information, such as lane keeping assistance, alarm information, prompt information, and weather information.

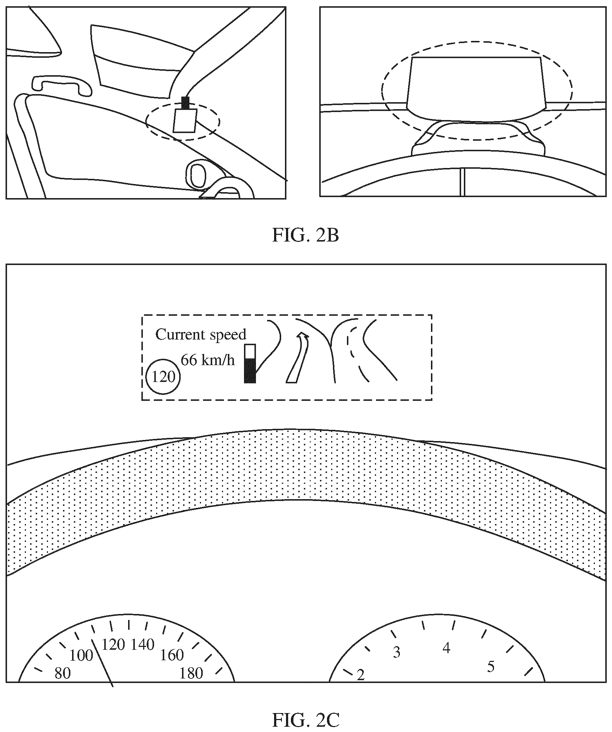

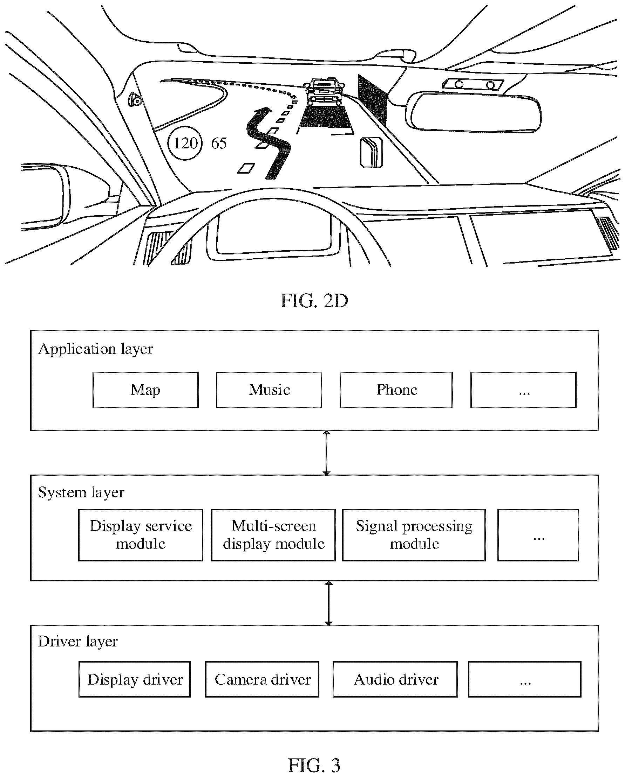

Optionally, the HUD may include a combiner head-up display (combiner-HUD, C-HUD) system, a windshield head-up display (windshield-HUD, W-HUD) system, and an AR-HUD. In addition, in terms of installation modes, the HUD mainly includes a front-mounted manner and a rear-mounted manner. In terms of installation positions, as shown in FIG. 2B, the HUD mainly includes a suspended HUD and a dashboard desk HUD. The C-HUD is mainly applied to a rear-mounted market, for example, a translucent resin plate is mounted on the top of the cabin in a suspension manner or above the dashboard, and the translucent resin plate, as a projection medium, is used to reflect a virtual image. The resin plate usually performs special processing based on an imaging condition, for example, is made into a wedge to avoid reflection ghosting, to improve display effect. As shown in FIG. 2C, the W-HUD uses a front windshield as an imaging medium to reflect imaging, and can support a larger imaging area and a longer projection distance. However, the windshield is usually a curved surface reflector. The W-HUD needs to adapt to a high-definition curved surface reflector based on a size and a curvature of the windshield, resulting in high costs. The W-HUD is mainly used in a front-mounted market. Currently, there are a plurality of technical paths: image amplification based on curved surface reflectors, image amplification based on holographic optical elements (HOE), and image amplification based on holographic optical waveguides (Waveguide). As shown in FIG. 2D, the AR-HUD, same as the W-HUD, uses a front windshield as an imaging medium to reflect imaging. However, the AR-HUD has a larger imaging area, a longer projection distance, and can fuse projection information with a traffic environment, so that imaging is more vivid.

The camera 193 is configured to capture a static image or a video. An optical image of an object is generated through lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as red green blue (red green blue, RGB) or luminance chrominance (luminance chrominance, YUV). In this application, the terminal device 100 may include one or N cameras 193, where N is a positive integer greater than 1.

The external memory interface 120 may be configured to connect to an external storage card, for example, a micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or an address book) created in a process of using the terminal device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor 110, to perform various function applications and data processing of the terminal device 100.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The terminal device 100 may implement an audio function via the audio module 170, for example, music playing or recording. The audio module 170 may implement an audio function through a speaker, a receiver, a microphone, a headset jack, an application processor, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The touch sensor is also referred to as a "touch component". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor may alternatively be disposed on a surface of the terminal device 100 at a position different from that of the display 194.

The button 190 includes a square control button, a power button, and a volume button. The button 190 may be a mechanical button, or may be a touch button. The terminal device 100 may receive a button input, and generate a button signal input related to a user setting and function control of the terminal device 100.

The motor 191 may be configured to provide a touch vibration feedback. For example, touch operations performed on different applications may correspond to different vibration feedback effect. The motor 191 may also correspond to different vibration feedback effect for touch operations performed on different areas of the display 194. Touch vibration feedback effect may be further customized.

The indicator 192 may be an indicator light, may be configured to indicate a power change, or may be configured to indicate a message, a turn light, a safety belt warning light, or the like.

After the hardware architecture of the terminal device 100 is described, the following describes a software system of the terminal device 100. The software system of the terminal device 100 may adopt a layered architecture, an event-driven architecture, a microkernel architecture, a microservice architecture, a cloud architecture, or the like. In this embodiment of this application, the layered architecture is used as an example to describe the software architecture of the terminal device 100.

FIG. 3 is a diagram of a software architecture of a terminal device 100 according to an embodiment of this application. In a layered architecture, software is divided into several layers, and each layer has a clear role and task. Layers communicate with each other through a software interface. In an example, as shown in FIG. 3, the layered architecture includes three layers that are an application layer, a system layer, and a driver layer from top to bottom.

The application layer may include a series of application packages. As shown in FIG. 3, the application package may include applications such as Map, Music, and Phone. The application layer runs on a virtual machine. The virtual machine executes java files of the application layer as binary files. The virtual machine is configured to perform functions such as object lifecycle management, stack management, thread management, safety and exception management, and garbage collection.

The system layer is responsible for system scheduling and management, provides an application programming interface (application programming interface, API), can communicate with an application at the application layer through the API, and can schedule a driver at the driver layer through the API. In an example, the system layer may include a display service module, a multi-screen display module, a signal processing module, and the like. The display service module may be configured to display an application interface on a display. The multi-screen display module may be configured to control multi-screen display of the terminal device 100. For example, the multi-screen display module provides a multi-screen display capability, and is configured to negotiate display content of a plurality of displays. Optionally, after being started, an application may also be displayed on one or more displays, and display content layouts on different displays may be the same or different. The signal processing module may be configured to implement signal transmission between modules in the terminal device 100. For example, the signal may include but is not limited to a controller local area network (controller area network, CAN) signal.

The driver layer is a layer between hardware and software. The driver layer may include one or more driver programs related to the terminal device 100. In an example, the driver layer may include a display driver, a camera driver, an audio driver, a Bluetooth driver, a Wi-Fi driver, and the like.

After the software architecture of the terminal device 100 is described, the following describes in detail specific content of the application display method provided in this application. In the application display method provided below, a first application may be an application that is forbidden to be used in a driving state of a vehicle, and a first function may be a function that is forbidden to be used in the driving state of the vehicle; a second application may be an application that can be used in the driving state of the vehicle but that is limited in use mode, and a second function may be a function that can be used in the driving state of the vehicle but that is limited in use mode; and a third application may be an application that can be normally used in the driving state of the vehicle, and a third function may be a function that can be normally used in the driving state of the vehicle.

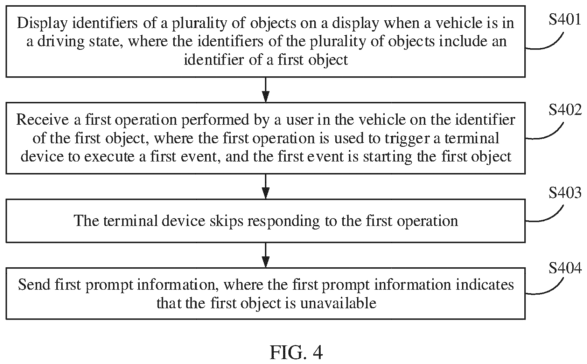

FIG. 4 is a schematic flowchart of an application display method according to an embodiment of this application. The method is applied to a terminal device including a display. The terminal device may be the terminal device provided above. The method includes the following several steps.

S401: The terminal device displays identifiers of a plurality of objects on the display when a vehicle is in a driving state, where the identifiers of the plurality of objects include an identifier of a first object. Alternatively, the display may display an identifier of only one object. In this specification, an example in which the identifiers of the plurality of objects are displayed is used for description.

That the vehicle is in the driving state may mean that the vehicle is in a moving state, an engine of the vehicle is in an operating state, and the vehicle has a specific moving speed. That the vehicle is in a non-driving state may mean that the vehicle is in a static state. For example, a moving speed of the vehicle is 0 or is close to 0. The static state may include an off state, a parking state, and the like.

In addition, the terminal device may be an in-vehicle device. The in-vehicle device may obtain a vehicle status, and determine, based on the vehicle status, that the vehicle is in the driving state. For example, the in-vehicle device may obtain status information such as gear information and speed information of the vehicle, and determine, based on the status information, that the vehicle is in the driving state.

Alternatively, the terminal device is a device other than an in-vehicle terminal. For example, the terminal device may be a mobile phone. When a user drives the vehicle, the user may establish a connection between the mobile phone and the in-vehicle terminal in a wired or wireless manner, so that the mobile phone can communicate with the in-vehicle terminal. In this way, the mobile phone may determine, based on status information of the vehicle transmitted by the in-vehicle terminal, that the vehicle is in the driving state.

In a possible embodiment, when the vehicle is in the non-driving state, the identifiers of the plurality of objects are displayed on the display. When the vehicle is switched from the non-driving state to the driving state, the identifiers of the plurality of objects are still displayed on the display. In another possible embodiment, when the vehicle is in the non-driving state, the identifiers of the plurality of objects are not displayed on the display. When the vehicle is switched from the non-driving state to the driving state, the identifiers of the plurality of objects are automatically displayed on the display, or the identifiers of the plurality of objects are displayed on the display based on an operation performed by the user on the display.

Optionally, the identifier of the object is an identifier of an application or an identifier of a function of an application, the identifier of the application may be an icon of the application, and the identifier of the function of the application may be an operation part or a touch area of the function of the application. When the identifier of the object is the identifier of the application, the identifier of the first object may be referred to as an identifier of a first application or a first application identifier. When the identifier of the object is the identifier of the function of the application, the identifier of the first object may be referred to as an identifier of a function of a first application or a first application function identifier. The function of the first application may be a function of an application (for example, the first application), and the function may be referred to as a first function. In actual application, the function may be referred to as a head unit service (head unit service, HUS), that is, one function may be referred to as one HUS.

The first application may be an application that needs to occupy a large quantity of visual resources or cognitive resources of the user, or may be an application that requires high attention focusing or frequent operations of the user. For example, the first application may be a video playing application, a game application, an instant messaging application, an operation application, or the like. Similarly, the first function may be a function that needs to occupy a large quantity of visual resources or cognitive resources of the user, or may be a function that requires high attention focusing or frequent operations of the user. For example, the first function may be a video call function, a dynamic display function, a character input function, a search function, a pop-up display function, or the like.

Optionally, the first application or the first function may be pre-configured. For example, the terminal device may receive configuration information of a server, where the configuration information indicates an application and/or a function with limited use permission. Alternatively, information about an application and/or function with limited use permission may be configured for the terminal device before the terminal device is delivered from a factory. To be specific, the information indicating the application or the function with the limited use permission may be preconfigured in the terminal device.

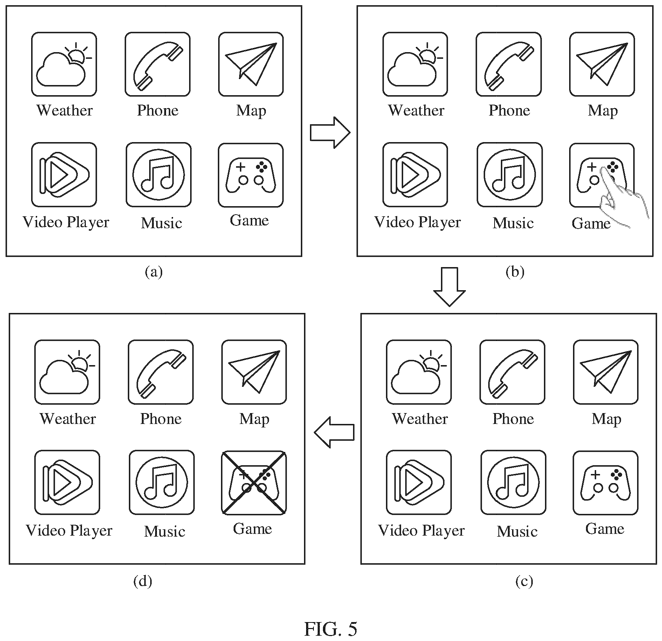

In an example, the identifiers of the plurality of objects include identifiers of a plurality of applications, that is, the identifiers of the plurality of applications are displayed on the display. For example, the identifier of the application is an icon. As shown in (a) in FIG. 5, when the vehicle is in the driving state, the terminal device displays icons of a plurality of applications on the display. The plurality of applications include Weather, Phone, Map, Video Player, Music, and Game. In (a) in FIG. 5, an example in which both Video Player and Game are first applications is used for description.

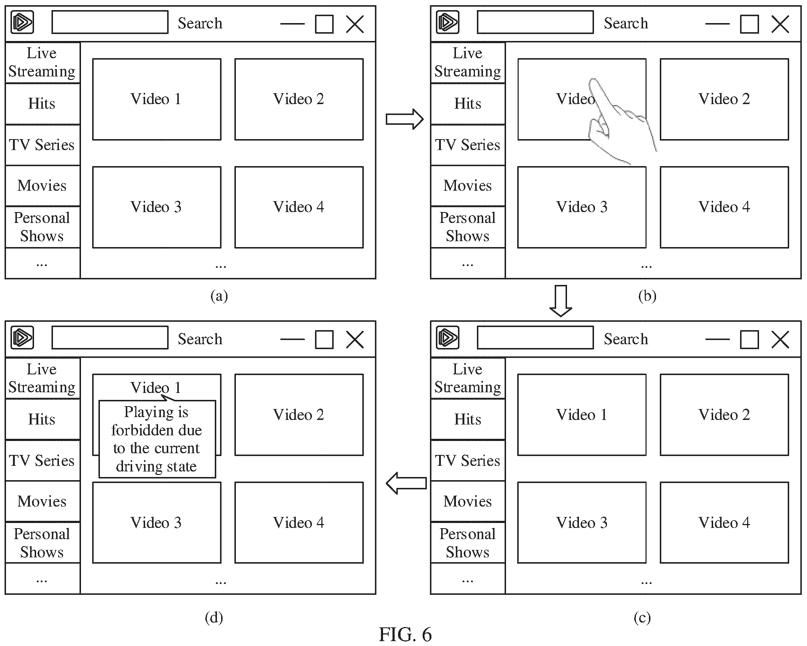

In another example, the identifiers of the plurality of objects include identifiers of a plurality of functions of a same application, that is, the identifiers of the plurality of functions of the same application are displayed on the display. For example, the identifier of the function is a touch area in which the function is started. As shown in (a) in FIG. 6, the first application is Video Player. When the vehicle is in the driving state, the terminal device displays touch areas of a plurality of functions of Video Player on the display. Identifiers of the plurality of functions include touch areas used to play a video 1 to a video 4 and touch areas used to select a plurality of video categories (such as Live Streaming, Hits, TV Series, Movies, and Personal Shows). In (a) in FIG. 6, an example in which functions of playing the video 1 to the video 4 are all first functions is used for description.

It should be noted that, in addition to displaying the identifiers of the plurality of objects, the display may further display other information. For example, the other information may include information such as a menu option, a toolbar, time, and signal strength. The other information displayed on the display is not specifically limited in embodiments of this application.

S402: The terminal device receives a first operation performed by a user in the vehicle on the identifier of the first object, where the first operation is used to trigger the terminal device to execute a first event, and the first event is starting the first object.

The first operation may be a tap operation, a slide operation, a touch and hold operation, a press operation, a preset gesture operation, or the like. This is not specifically limited in embodiments of this application. Optionally, the first operation may be a touch operation performed on the display, may be an operation triggered via a physical button, may be an operation triggered via voice control, may be a visual operation generated via an air gesture or an eyeball motion, may be a control operation performed by the user on another application via an application, or the like.

In addition, when the identifier of the first object is the identifier of the first application, the first event is starting the first application, and starting the first application may also be referred to as starting up or opening the first application. When the identifier of the first object is the identifier of the first function of the first application, the first event is starting the first function of the first application, and may also be referred to as starting up, opening, or using the first function of the first application.

In an example, with reference to the description of (a) in FIG. 5, as shown in (b) in FIG. 5, the user in the vehicle may perform a tap operation on an icon of Game on the display. The tap operation is used to start Game. In this way, the terminal device may receive the tap operation of the user.

In another example, with reference to the description of (a) in FIG. 6, as shown in (b) in FIG. 6, the user in the vehicle may perform a tap operation on a touch area that is on the display and that is used to play the video 1. The tap operation is used to play the video 1. In this way, the terminal device may receive the tap operation of the user.

S403: The terminal device skips responding to the first operation. Skipping responding to the first operation may also mean forbidding execution of the first event or not executing the first event. To be specific, when the vehicle is in the driving state, use of the first object is limited, and the user in the vehicle cannot use the first object using a corresponding operation.

In a possible embodiment, the identifier of the first object is the identifier of the first application. When the vehicle is in the driving state and the user in the vehicle starts the first application using the first operation, the terminal device does not perform an action of starting the first application, or does not open the first application. In this way, when the vehicle is in the driving state, the user (for example, a driver) in the vehicle cannot use the first application, to avoid a driving safety problem caused by excessive use of the application on the terminal device by the user. In an example, as described in (b) in FIG. 5, as shown in (c) in FIG. 5, when the user starts Game on the display using the tap operation, the terminal device does not open Game. For example, the terminal device still displays a user interface shown in (a) in FIG. 5.

In another possible embodiment, the identifier of the first object is the identifier of the first function of the first application. When the vehicle is in the driving state and the user in the vehicle starts the first function of the first application using the first operation, the terminal device does not perform an action of starting the first function of the first application, or does not open the first function of the first application. In this way, when the vehicle is in the driving state, the user (for example, a driver) in the vehicle cannot use the first function of the first application, to avoid a driving safety problem caused by excessive use of the function of the application on the terminal device by the user. In an example, as described in (b) in FIG. 6, as shown in (c) in FIG. 6, when the user starts playing of the video 1 on the display using the tap operation, the terminal device does not play the video 1. For example, the terminal device still displays a user interface shown in (a) in FIG. 6. Alternatively, in some other examples, when the user starts playing of the video 1 on the display using the tap operation, the terminal device may play only a sound, and does not present (or display) a picture corresponding to the video 1.

Optionally, when the first object is already in a starting state before the vehicle is in the driving state, the terminal device may suspend use of the first object or close the first object. For example, the first object is Game. When the vehicle is in the non-driving state, the user has started Game using the first operation. In this case, when the vehicle is switched from the non-driving state to the driving state, the terminal device may pause Game or close Game. For another example, the first object is Video Player. When the vehicle is in the non-driving state, the user has played a video in Video Player using the first operation. In this case, when the vehicle is switched from the non-driving state to the driving state, the terminal device may pause playing of the video or close playing of the video.

Further, the method may further include S404: The terminal device sends first prompt information, where the first prompt information indicates that the first object is unavailable. S404 and S401 to S403 are not performed in a sequence. For example, S404 and S401 may be performed simultaneously, or S404 and S403 may be performed simultaneously, or S404 is performed after S403. In FIG. 4, only an example in which S404 is performed after S403 is used for description.

That the first object is unavailable may also be referred to as that the first object is disabled, or the first object is not allowed to be operated.

If the identifier of the object is the identifier of the application, in a possible implementation, that the terminal device sends first prompt information includes: The terminal device displays the identifier of the first application in a first preset manner, where the first preset manner indicates that the first application is unavailable. The first preset manner may include but is not limited to: displaying the identifier of the first application in grayscale, displaying the identifier of the first application in black and white, or displaying an unavailable mark on the identifier of the first application. In addition, an identifier other than the identifier of the first application in the identifiers of the plurality of applications displayed on the display may be displayed in a second preset manner, and the second preset manner may be a conventional display manner.

To be specific, when the vehicle is in the driving state, when displaying the identifiers of the plurality of applications, the terminal device may display the identifier of the first application in the first preset manner, and display the another identifier in the identifiers of the plurality of applications in the second preset manner. Optionally, when the vehicle is in the non-driving state, if the identifiers of the plurality of applications are displayed on the display, the terminal device may display the identifiers in the second preset manner. This is not specifically limited in embodiments of this application.

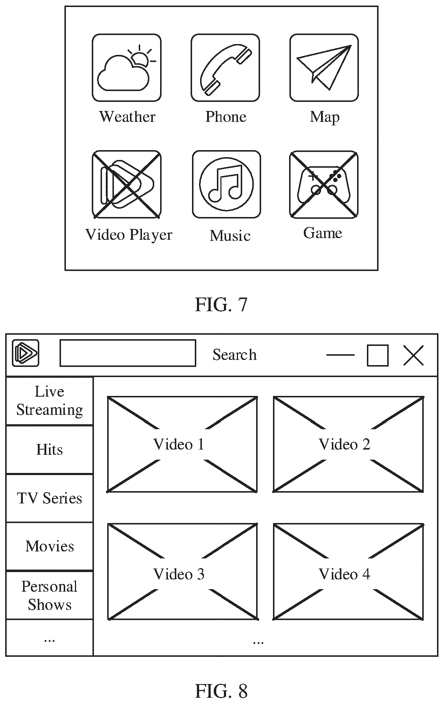

In an example, with reference to the description of (a) in FIG. 5, as shown in FIG. 7, when the vehicle is in the driving state, when the terminal device displays icons of the plurality of applications (that is, Weather, Phone, Map, Video Player, Music, and Game), the terminal device may display an icon of Video Player and an icon of Game on the display in a manner of displaying an unavailable mark (for example, the unavailable mark is "×"). Icons of Weather, Phone, Map, and Music in the plurality of applications may be displayed in a common manner.

If the identifier of the object is the identifier of the application, in a second possible implementation, that the terminal device sends first prompt information includes: after the terminal device receives the first operation (that is, S402), the terminal device plays the first prompt information by using a voice, or displays the first prompt information. That the terminal device displays the first prompt information may include but is not limited to: displaying the identifier of the first application in grayscale, displaying the identifier of the first application in black and white, displaying an unavailable mark on the identifier of the first application, or displaying prompt information indicating that the first application is unavailable in a pop-up window.

To be specific, when the vehicle is in the driving state, after the terminal device displays the identifiers of the plurality of applications, if the terminal receives the first operation on an icon of the first application of the user, the terminal device does not respond to the first operation, but the terminal may display the first prompt information or play the first prompt information, to indicate the user that the first application currently operated is unavailable or a plurality of first applications in the plurality of applications are unavailable.

In an example, with reference to the descriptions of (a) to (c) in FIG. 5, as shown in (d) in FIG. 5, when the vehicle is in the driving state, after the terminal device displays icons of the plurality of applications (that is, Weather, Phone, Map, Video Player, Music, and Game), and when the terminal device receives a tap operation performed by the user on an icon of Game, the terminal device may display an unavailable mark on the icon of Game, where the unavailable mark is "×".

If the identifier of the object is the identifier of the function of the application, in a possible implementation, that the terminal device sends first prompt information includes: The terminal device displays the identifier of the function of the first application in a first preset manner, where the first preset manner indicates that the function of the first application is unavailable. A description of the first preset manner herein is similar to the first preset manner in the foregoing case in which the identifier of the object is the identifier of the application. For details, refer to the foregoing description. Details are not described herein again in embodiments of this application. In addition, an identifier other than the identifier of the first application in the identifiers of the plurality of applications displayed on the display may be displayed in a second preset manner, and the second preset manner may be a conventional display manner.

To be specific, when the vehicle is in the driving state, when displaying the identifiers of the plurality of functions of the same application, the terminal device may display the identifier of the first function in the first preset manner, and display another identifier in the identifiers of the plurality of functions in the second preset manner. Optionally, when the vehicle is in the non-driving state, if the identifiers of the plurality of functions are displayed on the display, the terminal device may display the identifiers in the second preset manner. This is not specifically limited in embodiments of this application.

In an example, with reference to the description of (a) in FIG. 6, as shown in FIG. 8, when the vehicle is in the driving state and the terminal device displays identifiers of the plurality of functions of Video Player (that is, touch areas used to play a video 1 to a video 4, and touch areas used to select a plurality of video categories (for example, Live Streaming, Hits, TV Series, Movies, and Personal Shows)), the terminal device may display the touch areas used to play the video 1 to the video 4 on the display in a manner of displaying an unavailable mark, for example, the unavailable mark is "×".

If the identifier of the object is the identifier of the function of the application, in another possible embodiment, that the terminal device sends first prompt information includes: after the terminal device receives the first operation (that is, S402), the terminal device plays the first prompt information by using a voice, or displays the first prompt information. A description of the first preset manner herein is similar to the first preset manner in the foregoing case in which the identifier of the object is the identifier of the application. For details, refer to the foregoing description. Details are not described herein again in embodiments of this application.

To be specific, when the vehicle is in the driving state, after the terminal device displays the identifiers of the plurality of applications of the same application, if the terminal receives the first operation performed by the user on the identifier of the first function of the first application, the terminal device does not respond to the first operation, but the terminal may display the first prompt information or play the first prompt information, to indicate the user that the first function of the first application currently operated is unavailable.

In an example, with reference to the descriptions of (a) to (c) in FIG. 6, as shown in (d) in FIG. 6, when the vehicle is in the driving state, after the terminal device displays identifiers of the plurality of functions of Video Player (that is, touch areas used to play a video 1 to a video 4, and touch areas used to select a plurality of video categories (for example, Live Streaming, Hits, TV Series, Movies, and Personal Shows)), and when the terminal device receives a tap operation performed by the user on a touch area used to play the video 1, the terminal device may display prompt information for the video 1, where the prompt information may be "Playing is forbidden due to the current driving state".

In some of the foregoing embodiments, when the vehicle is in the driving state and the user in the vehicle starts the first application or the first function of the first application on the terminal device, the terminal device may not respond to an operation of the user, and send the first prompt information, to indicate the user in the vehicle that the first application or the first function of the first application is unavailable. This can improve user experience when driving safety is ensured. Similarly, when the vehicle is in the driving state and the user in the vehicle controls, using a corresponding operation, a function or a component that affects attention of the driver, for example, display brightness or a height of a display, audio volume, or light in the vehicle, the terminal device may not respond to the operation of the user, and send corresponding prompt information.

In some other embodiments, after the terminal device receives the first operation of the user, the terminal device may further determine, based on at least one piece of preset information, whether to respond to the first operation. The plurality of pieces of preset information include one or more of the following: position information of the user in the vehicle, display positions of the identifiers of the plurality of objects on the display, a position or a type of the display, and status information of the vehicle. To be specific, when the vehicle is in the driving state, use permission of the plurality of objects may be further related to one or more of the following: current position information of the user in the vehicle, display positions of the identifiers of the plurality of objects on the display, a position or a type of the display, and status information of the vehicle.

In a first possible implementation, after the terminal device receives the first operation of the user, the terminal device determines, based on the position information of the user in the vehicle, whether to respond to the first operation. When the terminal device determines that the user is a user in a driver seat, the terminal device does not respond to the first operation. Optionally, when the terminal device determines that the user is not the user in the driver seat, the terminal device responds to the first operation.

In an embodiment, a camera may be installed on the vehicle, and the terminal device may control the camera to photograph image information in the vehicle. In this way, the camera may obtain action information of different users in the vehicle, and transmit the action information to the terminal device. The terminal device may determine, based on the action information, whether the user is the user in the driver seat. If the user is the user in the driver seat, the terminal device does not respond to the first operation. In actual application, the terminal device may alternatively determine the position information of the user in the vehicle in another possible implementation. How the terminal device determines the position information of the user in the vehicle is not specifically limited in embodiments of this application.

In an example, with reference to the descriptions of (a) to (c) in FIG. 5, when the vehicle is in the driving state, after the terminal device displays icons of the plurality of applications (that is, Weather, Phone, Map, Video Player, Music, and Game), and when the terminal device receives a tap operation performed by the user on an icon of Game, the terminal device may not respond to the first operation when the terminal device determines that the user is the user in the driver seat, that is, the terminal device does not open Game or does not display an application interface of Game.

In another example, with reference to the descriptions of (a) to (c) in FIG. 6, when the vehicle is in the driving state, after the terminal device displays identifiers of the plurality of functions of Video Player (that is, touch areas used to play a video 1 to a video 4, and touch areas used to select a plurality of video categories (for example, Live Streaming, Hits, TV Series, Movies, and Personal Shows)), the terminal device receives a tap operation performed by the user on a touch area used to play the video 1. The terminal device may not open or play the video 1 when determining that the user is the user in the driver seat.

Similarly, after the terminal device receives the first operation of the user, and when the terminal device determines that the user is a user in a front passenger seat, the terminal device may not respond to the first operation. This is because a distance between the front passenger seat and the driver seat is short and there is no obstacle. When the user in the front passenger seat uses an application or a function of an application of the terminal device, the user in the driver seat may be attracted, resulting in distracting attention of the user in the driver seat and easily causing a safety risk. Optionally, when the terminal device determines that the user is a user in a rear seat, the terminal device may respond to the first operation.

To be specific, for a same application or a same function of a same application, the terminal device may not respond to an operation of a user in a specified seat, but respond to an operation of a user in a non-specified seat. In other words, for a same application or a same function of a same application, users at different seats have different use permission.

In a second possible implementation, after the terminal device receives the first operation of the user, the terminal device may further determine, based on the display positions of the identifiers of the plurality of objects on the display, whether to respond to the first operation. The display may include a first display area and a second display area. The first display area is a display area that is in the two display areas and that is close to a driver seat, or a distance between the first display area and the driver seat is less than a distance between the second display area and the driver seat. In this case, the first display area may be used as a display-disabled area. When the display positions of the identifiers of the plurality of objects on the display are the first display area, the terminal device does not respond to the first operation. Optionally, when the display positions of the identifiers of the plurality of objects on the display are the second display area, the terminal device may respond to the first operation. Identifiers of objects that may be displayed in different display areas may be the same or may be different.

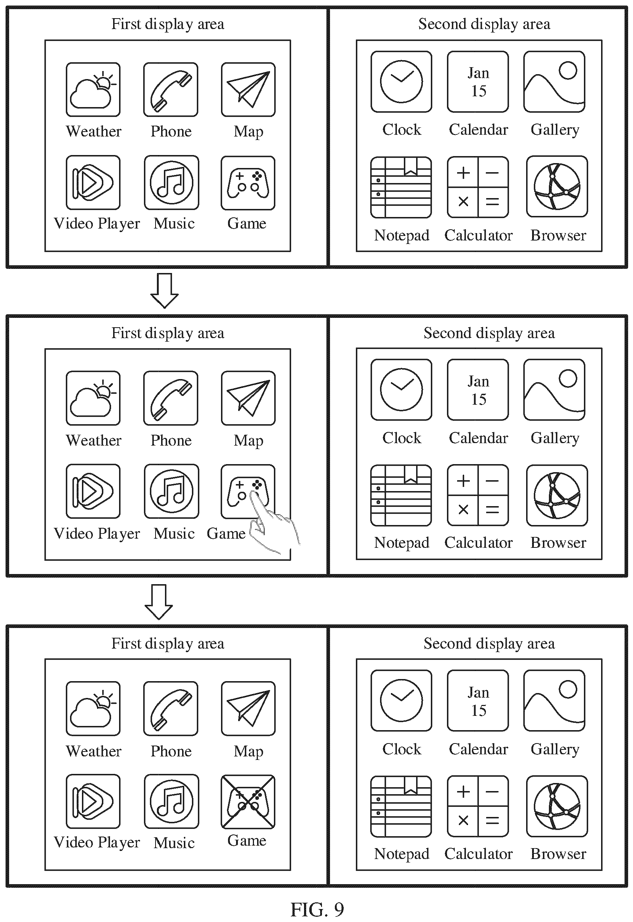

In an example, with reference to the description of FIG. 5, as shown in FIG. 9, it is assumed that the display includes a first display area and a second display area, and the first display area is a display area that is in the two display areas and that is close to a driver seat. When the vehicle is in the driving state, after the terminal device displays icons of the plurality of applications (that is, Weather, Phone, Map, Video Player, Music, and Game) in the first display area, and displays other applications (for example, Clock, Calendar, Gallery, Notepad, Calculator, and Browser) in the second display area, and when the terminal device receives a tap operation performed by the user on an icon of Game, the terminal device may not respond to the first operation when the terminal device determines that the icon of Game is displayed in the first display area, that is, the terminal device does not open Game or does not display an application interface of Game, and displays a user interface shown in (d) in FIG. 5.

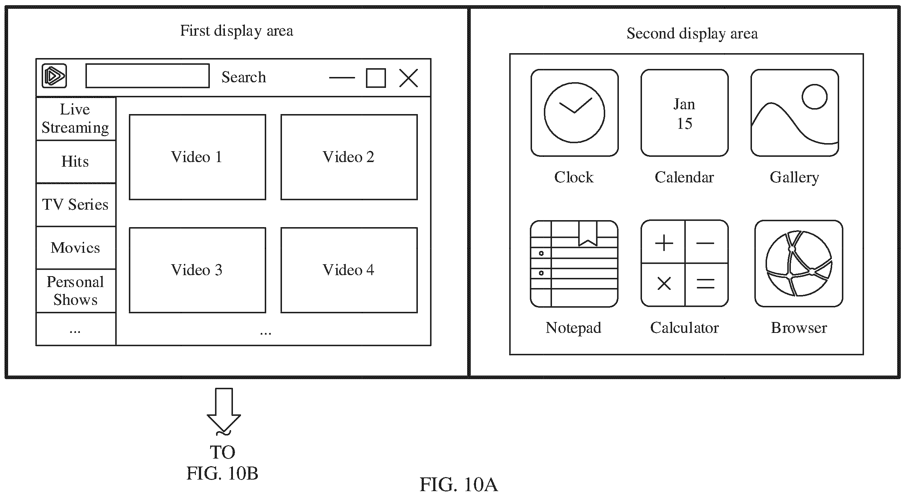

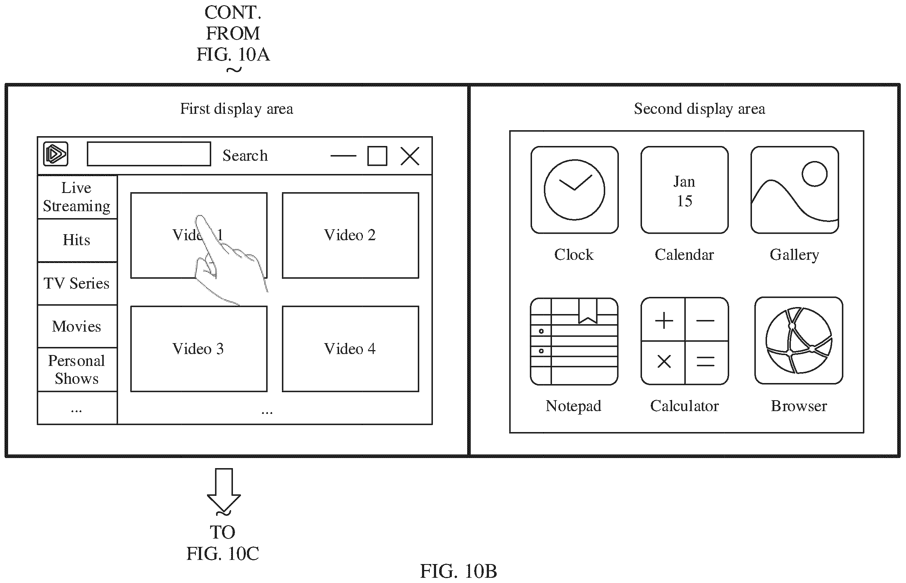

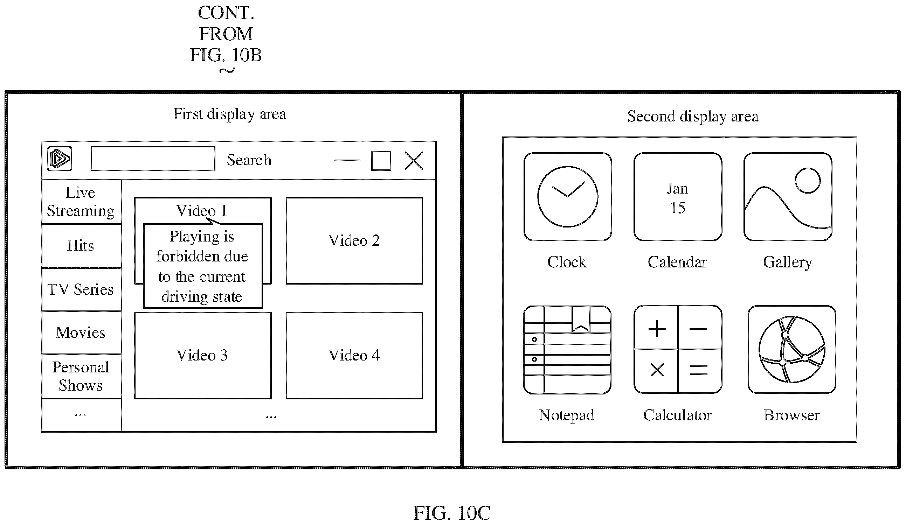

In another example, with reference to the description of FIG. 6, as shown in FIG. 10A to FIG. 10C, it is assumed that the display includes a first display area and a second display area. The first display area is a display area that is in the two display areas and that is close to a driver seat. When the vehicle is in the driving state, and after the terminal device displays, in the first display area, identifiers of the plurality of functions of Video Player (that is, touch areas used to play a video 1 to a video 4, and touch areas used to select a plurality of video categories (for example, Live Streaming, Hits, TV Series, Movies, Personal Shows)), and displays other applications (for example, Clock, Calendar, Gallery, Notepad, Calculator, and Browser) in the second display area, the terminal device receives a tap operation performed by the user on a touch area used to play the video 1. When determining that the touch area used to play the video 1 is displayed in the first display area, the terminal device may not open or play the video 1, and display an application interface shown in (d) in FIG. 6.

Further, the display may include a first display window and a second display window. The first display window may be a display window of the first display area, and the second display window may be a display window of the second display area. Optionally, positions of the first display window and the second display window are fixed, or positions of the first display window and the second display window are changeable (for example, the user may change the positions of the first display window and the second display window using a corresponding adjustment operation, so that the first display window is located in the second display area, and the second display window is located in the first display area).

If the positions of the first display window and the second display window are fixed, the first display window located in the first display area is a display window that is in the two display windows and that is close to a driver seat. In this case, the first display window may be used as a display-disabled window. When the terminal device receives the first operation of the user on the first display window, the terminal device does not respond to the first operation.

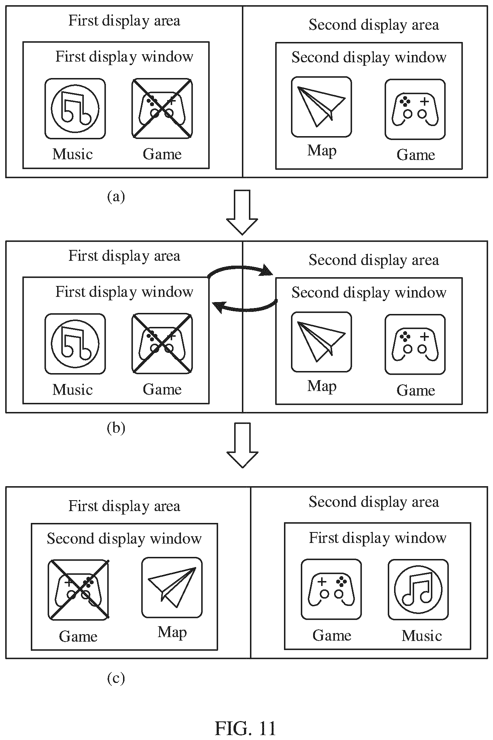

If the positions of the first display window and the second display window are changeable, the display window located in the first display area may be used as a display-disabled window. When the terminal device receives the first operation performed by the user on the display window in the first display area, the terminal device does not respond to the first operation. For example, as shown in (a) in FIG. 11, it is assumed that the first display window is located in the first display area, the second display window is located in the second display area, the first display area is a display-disabled area, the first display window displays icons of Music and Game, and the second display window displays icons of Music and Game. In this case, Game in the first display window cannot be started (for example, an unavailable mark is displayed for description), and Game in the second display window can be started (for example, an available mark is not displayed for description). Further, as shown in (b) in FIG. 11, the user changes display positions of the first display window and the second display window, so that the first display window is located in the second display area, and the second display window is located in the first display area. In this case, as shown in (c) in FIG. 11, Game in the second display window cannot be started (for example, an unavailable mark is displayed for description), and Game in the first display window can be started (for example, an available mark is not displayed for description).

To be specific, in a scenario in which the display includes a plurality of display areas, the terminal device may not respond to an operation of the user on an application or a function of an application displayed in a specified display area, but respond to an operation of the user on a same application or different applications in a non-specified display area, or respond to an operation of the user on a same function or different functions of a same application in a non-specified display area. In other words, for a same application or different applications in different display areas, use permission of a same user may be different, and for a same function or different functions of a same application in different display areas, use permission of a same user may be different.

In a third possible implementation, after the terminal device receives the first operation of the user, the terminal device may further determine, based on the position or the type of the display, whether to respond to the first operation.

In an embodiment, based on the position of the display for division, and the display may include a display on a front windshield, a display on a center console, a display in front of a driver seat, a display in front of a front passenger seat, a display in front of a rear seat, and the like. After the terminal device receives the first operation of the user, if the terminal determines that the display used to display the identifiers of the plurality of objects is the display on the front windshield, the display in front of the driver seat, or the display on the center console, the terminal device does not respond to the first operation.

In another embodiment, based on the type of the display for division, the display may include an in-vehicle display and a projection display. Optionally, the projection display may be an HUD. After the terminal device receives the first operation of the user, if the terminal determines that the display used to display the identifiers of the plurality of objects is the projection display, the terminal device does not respond to the first operation.

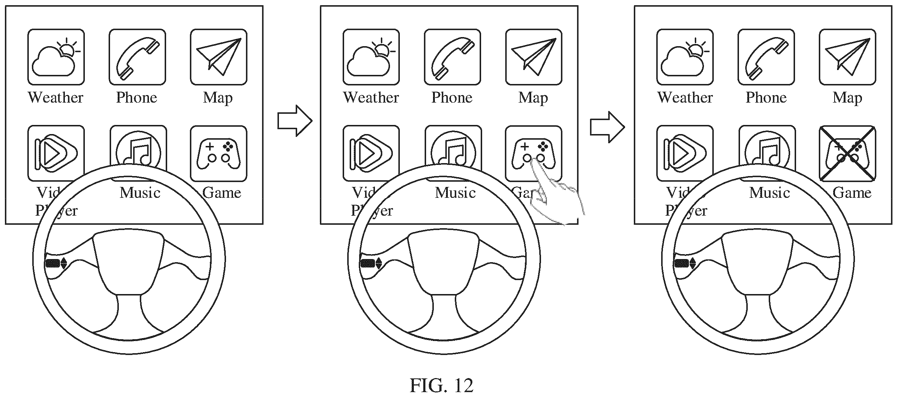

In an example, with reference to the description of FIG. 5, as shown in FIG. 12, when the vehicle is in the driving state, after the terminal device displays identifiers of the plurality of applications (that is, Weather, Phone, Map, Video Player, Music, and Game) on the display, and when the terminal device receives a tap operation performed by the user on an icon of Game, the terminal device may not respond to the first operation when the terminal device determines that the display is the display in front of the driver seat, that is, the terminal device does not open Game or does not display an application interface of Game. For example, the terminal device displays a user interface shown in (d) in FIG. 5.

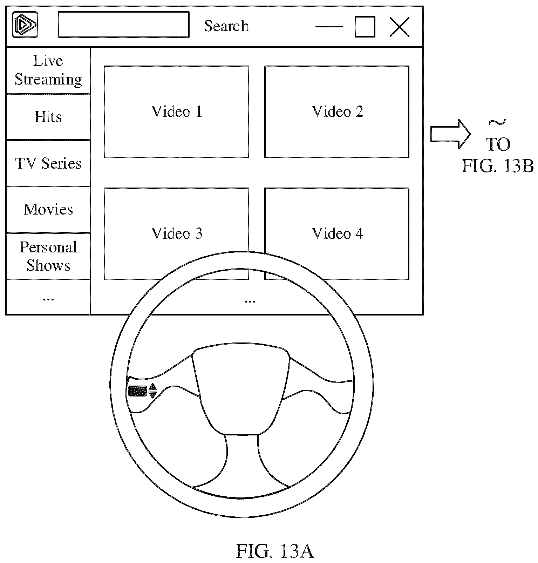

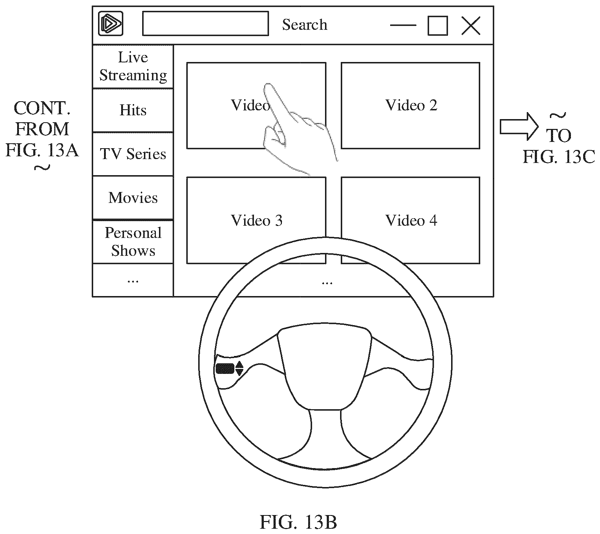

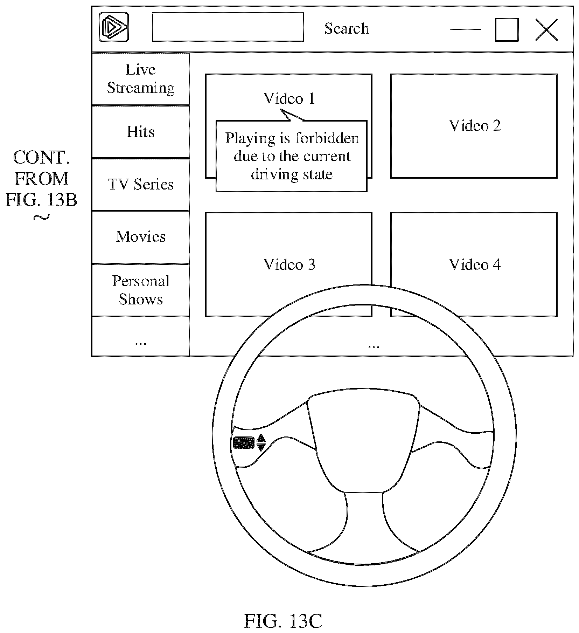

In another example, with reference to the description of FIG. 6, as shown in FIG. 13A to FIG. 13C, when the vehicle is in the driving state, and after the terminal device displays, on the display, identifiers of the plurality of functions of Video Player (that is, touch areas used to play a video 1 to a video 4 and touch areas used to select a plurality of video categories (for example, Live Streaming, Hits, TV Series, Movies, and Personal Shows)), the terminal device receives a tap operation performed by the user on a touch area used to play the video 1. The terminal device may not open or play the video 1 when determining that the display is the HUD. For example, the terminal device displays a user interface shown in (d) in FIG. 6.

To be specific, in a scenario in which there are a plurality of displays, the terminal device may not respond to an operation performed by the user on an application or a function of an application displayed on a specified display, but respond to an operation performed by the user on an application or a function of an application displayed on a non-specified display. In other words, a same user has different use permission for applications or functions of applications displayed on different displays.

Optionally, when the terminal device includes a plurality of displays, the terminal device may include at least one processor. In an implementation, one of the at least one processor controls display of the plurality of displays. In another implementation, different processors in the at least one processor control display of different displays in the plurality of displays.

In a fourth possible implementation, after the terminal device receives the first operation of the user, the terminal device may further determine, based on the status information of the vehicle, whether to respond to the first operation. When the terminal device determines that status information of the vehicle meets a first preset condition, the terminal device skips responding to the first operation. Optionally, when the terminal device determines that the status information of the vehicle does not meet the first preset condition, the terminal device may respond to the first operation.

The status information of the vehicle includes at least one of the following information: speed information, gear information, power supply information, and safety information. The speed information may be information about a travelling speed of the vehicle. The gear information may be information about a current gear of the vehicle. For example, the gear of the vehicle may include a parking (parking, P) gear, a drive (drive, D) gear, and a reverse (reverse, R) gear. The power supply information may be information such as a current state of charge of a power supply of the vehicle and/or an available endurance mileage. The safety information may be a series of information related to vehicle safety. For example, the safety information may include an environment in which the vehicle is located and conventional vehicle safety check information. The first preset condition may include a condition corresponding to each piece of information in the status information of the vehicle. For example, a condition corresponding to the speed information may be that a speed of the vehicle meets a specific speed range, a condition corresponding to the gear information may be a specific gear of the vehicle, a condition corresponding to the power supply information may be that power of a power supply meets a specific power range, and a condition corresponding to the safety information may be a level requirement and an environment requirement of a safety parameter.

Optionally, in different states of the vehicle, ranges of applications that the terminal device does not respond to may be different, and ranges of different functions that are of a same application and that the terminal device does not respond to may also be different. To be specific, for different states of the vehicle, use permission of a same application on the terminal device may be different, use permission of different applications may be different, use permission of a same function of a same application may be different, and use permission of different functions of a same application may be different. For example, starting of an application is used as an example. When a speed of the vehicle is 10 m/s, the terminal device does not respond to a starting operation of the user on Game, but responds to a starting operation of the user on Video Player; or when a speed of the vehicle is 40 m/s, the terminal device does not respond to a starting operation of the user on Game, and does not respond to a starting operation of the user on Video Player. For another example, starting of a play function of Video Player is used as an example. When a speed of the vehicle is 5 m/s, the terminal device responds to a play operation of the user on a video in Video Player; or when a speed of the vehicle is 40 m/s, the terminal device does not respond to a play operation of the user on a video.

In the foregoing described possible implementations, only a process in which the terminal device determines, based on one piece of preset information, whether to respond to the first operation when the at least one piece of preset information includes the piece of preset information is used as an example for description. In actual application, the at least one piece of preset information may include a plurality of pieces of preset information, that is, the terminal device may determine, based on the plurality of pieces of preset information, whether to respond to the first operation. For example, the terminal device may not respond to the first operation when each piece of information in the plurality of pieces of preset information meets a corresponding constraint. The plurality of pieces of preset information may include any two or more of the following: the position information of the user in the vehicle, the display positions of the identifiers of the plurality of objects on the display, the position or the type of the display, and the status information of the vehicle. Details are not listed one by one in embodiments of this application.

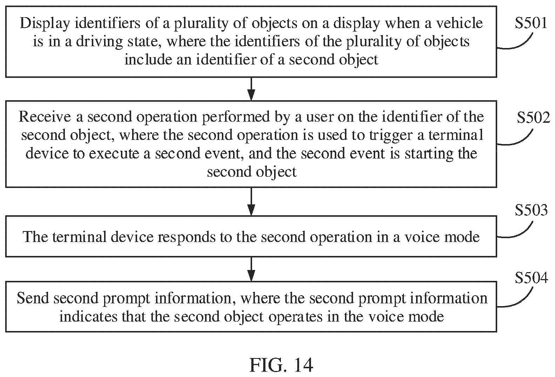

Based on this, with reference to the embodiment described in FIG. 4, as shown in FIG. 14, an embodiment of this application further provides another application display method. The method is applied to a terminal device including a display, and the method may include the following several steps.

S501: The terminal device displays identifiers of a plurality of objects on the display when a vehicle is in a driving state, where the identifiers of the plurality of objects include an identifier of a second object. Alternatively, the display may display an identifier of only one object. In this specification, an example in which the identifiers of the plurality of objects are displayed is used for description.

The second object may be a second application, and the second application may be a video playing application, an instant messaging application, an operation application, a reading application, or the like; or the second object is a function of an application, for example, the second object is a second function of a second application, and the second function includes a video call function, a dynamic display function, a character input function, a search function, or the like.

It should be noted that a process in which the terminal device displays the identifiers of the plurality of objects on the display when the vehicle is in the driving state is similar to the foregoing process of S401. For details, refer to the foregoing related descriptions of S401. Details are not described herein again in embodiments of this application.

S502: The terminal device receives a second operation performed by a user on the identifier of the second object, where the second operation is used to trigger the terminal device to execute a second event, and the second event is starting the second object.

The second operation may be a tap operation, a slide operation, a touch and hold operation, a press operation, a preset gesture operation, or the like. This is not specifically limited in embodiments of this application. Optionally, the second operation may be a touch operation performed on the display, may be an operation triggered via a physical button, may be an operation triggered via voice control, may be a visual operation generated via an air gesture or an eyeball motion, may be a control operation performed by the user on another application via an application, or the like.

In addition, when the identifier of the second object is an identifier of the second application, the second event is starting the second application. When the identifier of the second object is an identifier of the second function of the second application, the second event is starting the second function of the second application.

S503: The terminal device responds to the second operation in a voice mode. To be specific, when the vehicle is in the driving state, a use mode of the second object is limited, and the user in the vehicle can use the second object in only the voice mode.

In a possible embodiment, the identifier of the second object is the identifier of the second application. When the vehicle is in the driving state and the user in the vehicle starts the second application using the second operation, the terminal device responds to the second operation in the voice mode, that is, the second application is started in the voice mode. For example, in an opening process, the terminal device may not display a dynamic picture that Video Player is opened, but display an icon of Video Player on the display in a static and full-screen display manner, and play voice data corresponding to the video. In this way, when the vehicle is in the driving state, the user (for example, a driver) in the vehicle can use the second application in only the voice mode, to avoid excessively dispersing visual resources or attention of the user due to use of the second application, so as to avoid a driving safety problem caused by excessive use of the application on the terminal device by the user.

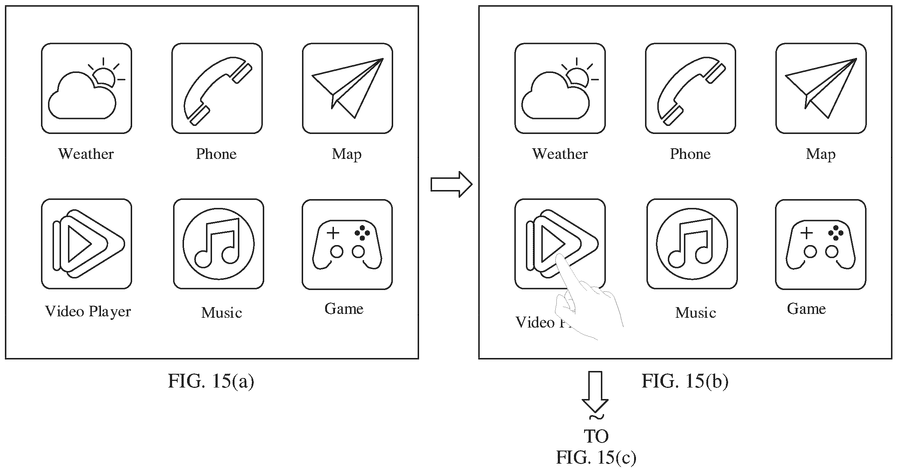

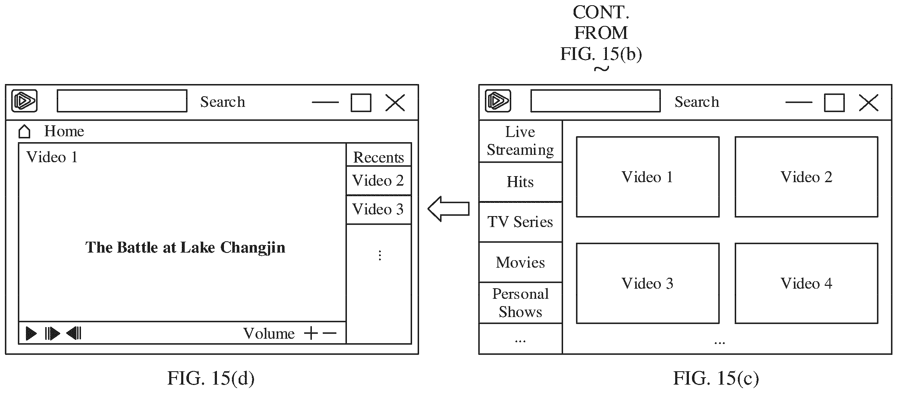

For example, as shown in FIG. 15(a), icons of a plurality of applications are displayed on the display, where the plurality of applications include Weather, Phone, Map, Video Player, Music, and Game. For example, the second application is Video Player. As shown in FIG. 15(b), when the user starts Video Player using a tap operation, the terminal device may open Video Player in a voice mode, that is, only voice data in a starting process of Video Player is played, and no corresponding video picture is displayed. After being started, a corresponding application interface may be a default home page of Video Player, as shown in FIG. 15(c). Further, when Video Player automatically plays a recommended video after being started, for example, some video players of a short video type, as shown in FIG. 15(d), the terminal device may play only voice data of the recommended video, and does not display a corresponding video picture, and only text information related to the recommended video may be displayed on a corresponding application interface. The text information may be a keyword, for example, "The Battle at Lake Changjin".

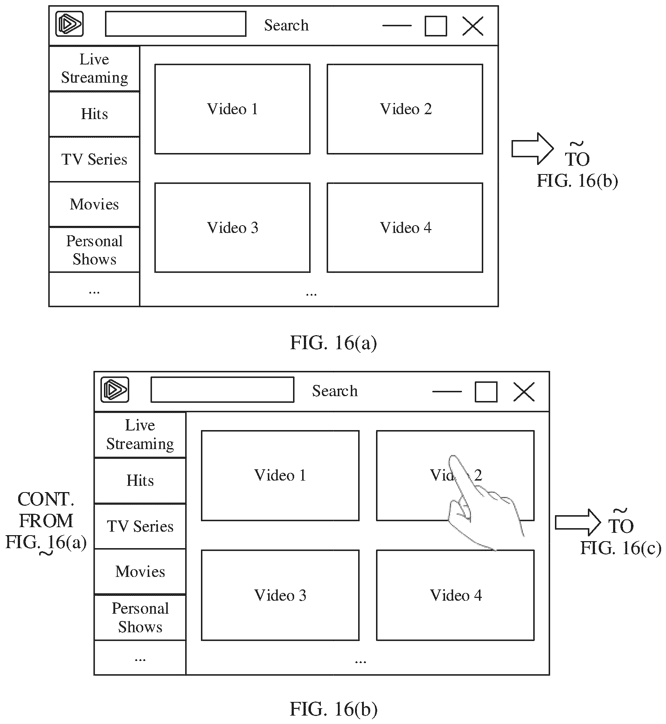

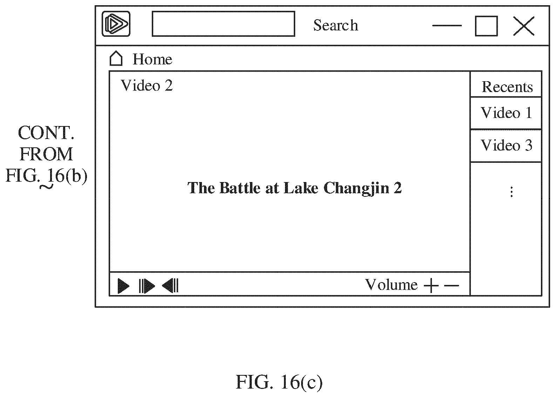

In another possible embodiment, the identifiers of the plurality of objects include identifiers of a plurality of functions of a same application, that is, the identifiers of the plurality of functions of the same application are displayed on the display. For example, the identifier of the function is a touch area in which the function is started. It is assumed that the second application is Video Player. As shown in FIG. 16(a), when the vehicle is in the driving state, the terminal device displays touch areas of a plurality of functions of Video Player on the display. Identifiers of the plurality of functions include touch areas used to play a video 1 to a video 4 and touch areas used to select a plurality of video categories (such as Live Streaming, Hits, TV Series, Movies, and Personal Shows). As shown in FIG. 16(b), the user performs a tap operation on a touch area used to play the video 2, where the tap operation is used to play the video 2. As shown in FIG. 16(c), the terminal device plays only voice data of the video 2, and does not display a corresponding video picture. Only text information related to the video 2 may be displayed on a corresponding application interface, where the text information may be a keyword, for example, "The Battle at Lake Changjin 2".

Optionally, when the second object is already in a starting state before the vehicle is in the driving state, the terminal device may switch an operating mode of the second object to the voice mode. For example, the second object is Video Player. When the vehicle is in a non-driving state, the user has played a video in Video Player using the second operation. In this case, when the vehicle is switched from the non-driving state to the driving state, the terminal device may play only audio data of the video, and does not play picture data of the video.

Further, the method may further include S504: The terminal device sends second prompt information, where the second prompt information indicates that the second object operates in the voice mode.

In some possible embodiments, that the terminal device sends second prompt information includes: The terminal device displays the identifier of the second object in a third preset manner, where the third preset manner indicates that the second object operates in the voice mode; or the terminal device displays the second prompt information on the display; or the terminal device plays the second prompt information by using a voice.

It should be noted that a process in which the terminal device sends the second prompt information in the foregoing manner is basically the same as the foregoing process in which the terminal device sends the first prompt information in the foregoing similar manner. For details, refer to the foregoing description of sending the first prompt information. Details are not described herein again in embodiments of this application. In addition, when the terminal device simultaneously displays the foregoing two types of prompt information by using an unavailable mark, different unavailable marks may be used for differentiation.

In some of the foregoing embodiments, when the vehicle is in the driving state and the user in the vehicle starts the second application or the second function of the second application on the terminal device, the terminal device may respond to an operation of the user in the voice mode, and send the second prompt information, to indicate the user in the vehicle that the second application or the second function of the second application operates in the voice mode. This can improve user experience when driving safety is ensured.

In some other embodiments, after the terminal device receives the second operation of the user, the terminal device may further determine, based on at least one piece of preset information, whether to respond to the second operation in the voice mode. The at least one piece of preset information includes one or more of the following: position information of the user in the vehicle, display positions of the identifiers of the plurality of objects on the display, a position or a type of the display, and status information of the vehicle.

It should be noted that a process in which the terminal device determines, in the foregoing manner, whether to respond to the second operation in the voice mode is basically the same as the foregoing process in which the terminal device determines, in a manner similar to the foregoing manner, whether to respond to the first operation. For details, refer to the foregoing description of determining whether to respond to the first operation. Details are not described herein again in embodiments of this application.

Based on this, based on the method provided in FIG. 4 and/or FIG. 14, the identifiers of the plurality of objects displayed on the display may further include an identifier of a third object, and the method may further include the following steps. The following steps are not shown in FIG. 4 and FIG. 14 in this embodiment of this application.

S505: The terminal device receives a third operation performed by the user on the identifier of the third object, where the third operation is used to trigger the terminal device to start the third object.

The third operation may be similar to the first operation or the second operation, and may be specifically a tap operation, a slide operation, a touch and hold operation, a press operation, a preset gesture operation, or the like. This is not specifically limited in embodiments of this application. Optionally, the third operation may be a touch operation performed on the display, may be an operation triggered via a physical button, may be an operation triggered via voice control, may be a visual operation generated via an air gesture or an eyeball motion, may be a control operation performed by the user on another application via an application, or the like.

In addition, the third object may be an application or a function of an application that does not occupy or slightly occupies visual resources or cognitive resources of the user, or may be an application or a function of an application that does not require high attention focusing and frequent operations of the user. For example, the third object is a third application, and the third application may be a system application, an audio playing application, a time or event reminder application, an image display application, or the like. For example, the second application may be Settings, Music, Calendar, Clock, Gallery, or the like. Alternatively, the third function may be a third function of the third application, and the third function may be an audio playing function, a static display function, a navigation function, a local dynamic display function, or the like.

S506: The terminal device responds to the third operation.

In a possible embodiment, the identifier of the third object is an identifier of the third application. When the vehicle is in the driving state and the user in the vehicle starts the third application using the third operation, the terminal device responds to the third operation, that is, the terminal device may normally start the third application. In this way, when the vehicle is in the driving state, the user (for example, a driver) in the vehicle may normally use the third application. Because the third application is an application that does not need to occupy a large quantity of visual resources or cognitive resources of the user, or an application that does not require high attention focusing and frequent operations of the user. This can improve use flexibility of the application and user experience when driving safety is ensured.

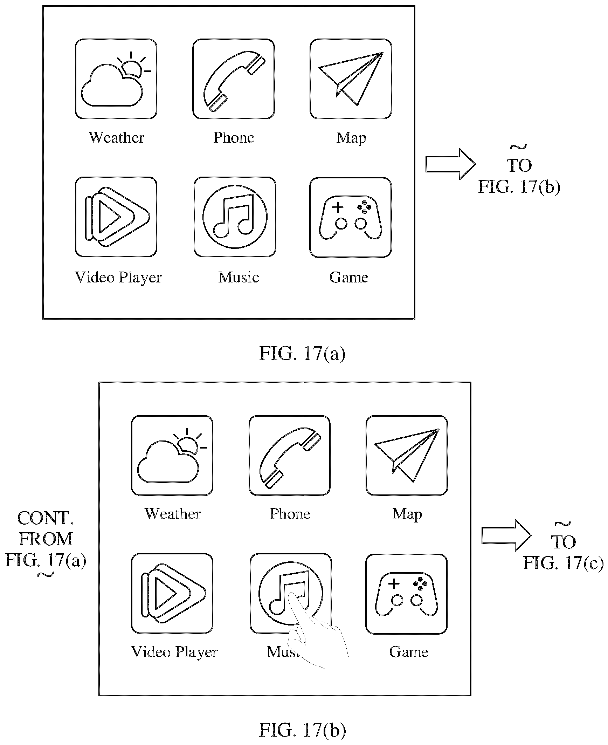

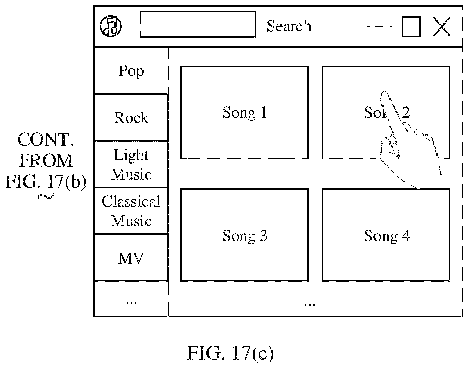

For example, as shown in FIG. 17(a), icons of a plurality of applications are displayed on the display, where the plurality of applications include Weather, Phone, Map, Video Player, Music, and Game. For example, the third application is Music. As shown in FIG. 17(b), when the user starts Music using a tap operation, the terminal device may normally open Music. As shown in FIG. 17(c), after Music is opened, a home page of Music may be displayed on the display. The home page may include a plurality of music categories such as Pop, Rock, Light Music, Classical Music, and Music Video (music video, MV), and a plurality of recommended songs (for example, a song 1 to a song 4).

In another possible embodiment, the identifiers of the plurality of objects include identifiers of a plurality of functions of a same application, that is, the identifiers of the plurality of functions of the same application are displayed on the display. When the vehicle is in the driving state and the user starts the third function of the third application on the display using the third operation, the terminal device may normally start the third function. In this way, when the vehicle is in the driving state, the user (for example, a driver) in the vehicle may normally use the third function. Because the third function is a function of an application that does not need to occupy a large quantity of visual resources or cognitive resources of the user, or a function of an application that does not require high attention focusing and frequent operations of the user. This can improve use flexibility of the function of the application and user experience when driving safety is ensured.

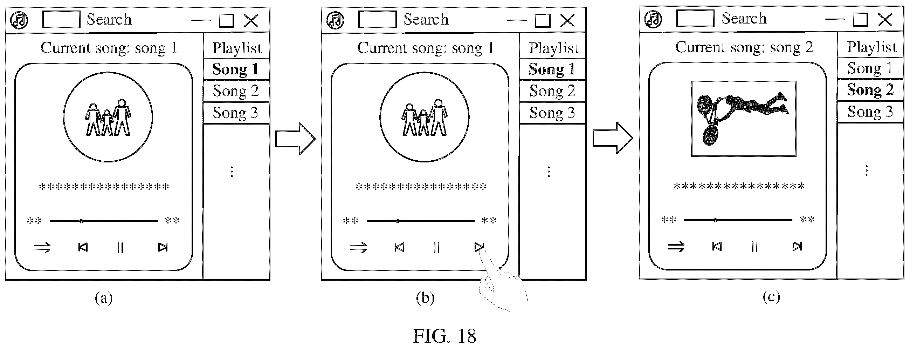

For example, the identifier of the function is a touch area in which the function is started. It is assumed that the third application is Music. As shown in (a) in FIG. 18, when the vehicle is in the driving state, the terminal device displays a playing interface of Music on the display. The playing interface is a playing interface of a song 1. The playing interface includes buttons of a plurality of functions, and the plurality of functions include fast-forward, previous, pause, and next. As shown in (b) in FIG. 18, the user performs a tap operation on the button of next, and the tap operation is used to play a next song. As shown in (c) in FIG. 18, the terminal device plays a song 2 and displays a playing interface corresponding to the song 2.

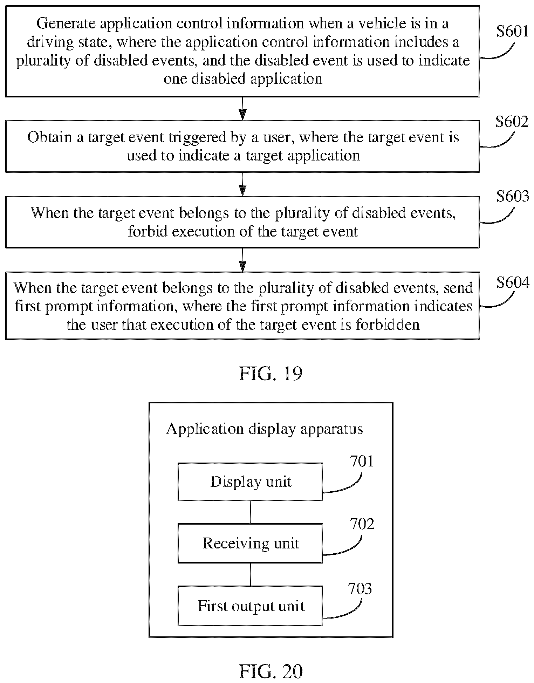

Based on this, with reference to the application display method provided above, as shown in FIG. 19, an embodiment of this application further provides an application control method. The application control method may be applied to a terminal device including a display, and the method may include the following several steps.

S601: Generate application control information when a vehicle is in a driving state, where the application control information includes a plurality of disabled events, and the disabled event is used to indicate one disabled application.

An event in each disabled event may be an event of starting (or referred to as using, starting up, or opening) an indicated application, and the disabled event may be an event that is forbidden to be executed, so that each disabled event may be used to indicate that a corresponding application is forbidden to be started or used. The plurality of disabled events may be used to indicate that a plurality of corresponding applications are forbidden to be started or used.

In a possible embodiment, when the terminal device detects that the vehicle is switched from a non-driving state to the driving state, the terminal device may generate the application control information based on a plurality of installed applications and an application (or application category) that is forbidden to be used, that is, generate a plurality of disabled events. The application or application category that is forbidden to be used may include an application that needs to occupy a large quantity of visual resources or cognitive resources of the user, or may be an application that requires high attention focusing or frequent operations of the user.

Optionally, the disabled event is used to indicate one disabled application and one disabled function. To be specific, an event in each disabled event may be an event of starting (or referred to as using, starting up, or opening) a function of an indicated application, so that each disabled event may be used to indicate that a function of a corresponding application is forbidden to be started or used. The plurality of disabled events may be used to indicate that a plurality functions of a plurality of corresponding applications are forbidden to be started or used.

In a possible embodiment, when the terminal device detects that the vehicle is switched from a non-driving state to the driving state, the terminal device may generate the application control information based on a plurality of installed applications and an application and a function that are forbidden to be used, that is, generate a plurality of disabled events. The application that is forbidden to be used may include an application that needs to occupy a large quantity of visual resources or cognitive resources of the user, or may be an application that requires high attention focusing or frequent operations of the user. The function that is forbidden to be used may include a video call function, a dynamic display function, a character input function, a search function, a pop-up display function, or the like.

S602: Obtain a target event triggered by the user, where the target event is used to indicate a target application.

In a possible embodiment, if the disabled event is used to indicate one disabled application, the target event may be an event of starting the target application. In this case, when the vehicle is in the driving state and the user may start, using a corresponding operation (the operation may be referred to as a first operation), an application (the application is referred to as a target application) installed on the terminal device, the terminal device may receive the first operation of the user, and determine, based on the first operation and a target application corresponding to the first operation, the target event triggered by the user.

In another possible embodiment, if the disabled event is used to indicate one disabled application and one disabled function, the target event is further used to indicate a target function. In other words, the target event may be an event of starting the target function of the target application. In this case, when the vehicle is in the driving state and the user may start the target function of the target application on the terminal device using the first operation, the terminal device may receive the first operation of the user, and determine, based on the first operation, the target application corresponding to the first operation, and the target function, the target event triggered by the user.

The first operation may be a tap operation, a slide operation, a touch and hold operation, a press operation, a preset gesture operation, or the like. This is not specifically limited in embodiments of this application. Optionally, the first operation may be a touch operation performed on the display, may be an operation triggered via a physical button, may be an operation triggered via voice control, may be a visual operation generated via an air gesture or an eyeball motion, may be a control operation performed by the user on another application via an application, or the like.

S603: When the target event belongs to the plurality of disabled events, forbid execution of the target event.

When the terminal device determines that the target event belongs to the plurality of disabled events, the terminal device forbids execution of the target event, or is referred to as not executing the target event. If the target event is the event of starting the target application, the terminal device may not start or open the target application when determining that the event of starting the target application is the disabled event. If the target event is the event of starting the target function of the target application, the terminal device may not start or open the target function of the target application when determining that the event of starting the target function of the target application is the disabled event.

Optionally, when the target application is already in a starting state before the vehicle is in the driving state, the terminal device may suspend use of the target application or close the target application. When the target function of the target application is already in a starting state before the vehicle is in the driving state, the terminal device may suspend use of the target function or close the target function.

Further, the method may further include S604: when the target event belongs to the plurality of disabled events, send first prompt information, where the first prompt information indicates the user that execution of the target event is forbidden.

In a possible implementation, if the target event is the event of starting the target application, that the terminal device sends first prompt information includes: The terminal device displays an identifier of the target application in a first preset manner before receiving the first operation; or the terminal device displays an identifier of the target application in a first preset manner after receiving the first operation; or the terminal device plays the first prompt information by using a voice. The first preset manner may include but is not limited to: displaying the identifier of the target application in grayscale, displaying the identifier of the target application in black and white, or displaying an unavailable mark on the identifier of the target application.

In another possible implementation, if the target event is the event of starting the target function of the target application, that the terminal device sends first prompt information includes: The terminal device displays an identifier of the target function of the target application in a first preset manner before receiving the first operation; or the terminal device displays an identifier of the target function of the target application in a first preset manner after receiving the first operation; or the terminal device plays the first prompt information by using a voice. The first preset manner may include but is not limited to: displaying the identifier of the target function of the target application in grayscale, displaying the identifier of the target function of the target application in black and white, or displaying an unavailable mark on the identifier of the target function of the target application.

It should be noted that a process in which the terminal device sends the first prompt information in the foregoing manner is basically the same as the process in which the terminal device sends the first prompt information in the foregoing embodiment corresponding to FIG. 4. For details, refer to the foregoing descriptions in the embodiment corresponding to FIG. 4. Details are not described herein again in embodiments of this application.

Further, in S603, when determining that the target event belongs to the plurality of disabled events, the terminal device may further determine, based on at least one piece of preset information, whether to forbid execution of the target event. The at least one piece of preset information includes one or more of the following: position information of the user in the vehicle, a display position of the target application or the target function of the target application on the display, a position or a type of the display, and status information of the vehicle.

In a first possible implementation, if the terminal device determines that the target event belongs to the plurality of disabled events, and the user that triggers the target event is a user in a driver seat, the terminal device forbids execution of the target event. Optionally, a camera may be installed on the vehicle, and the terminal device may control the camera to photograph image information in the vehicle. In this way, the camera may obtain action information of different users in the vehicle, and transmit the action information to the terminal device. The terminal device may determine, based on the action information, whether the user is the user in the driver seat. In actual application, the terminal device may alternatively determine the position information of the user in the vehicle in another possible implementation. How the terminal device determines the position information of the user in the vehicle is not specifically limited in embodiments of this application.

Similarly, if the terminal device determines that the target event belongs to the plurality of disabled events, and the user that triggers the target event is a user in a front passenger seat, the terminal device may also forbid execution of the target event. This is because a distance between the front passenger seat and the driver seat is short and there is no obstacle. When the user in the front passenger seat uses an application or a function of an application of the terminal device, the user in the driver seat may be attracted, resulting in distracting attention of the user in the driver seat and easily causing a safety risk.

To be specific, for a same application or a same function of a same application, the terminal device may forbid only a user in a specified seat from using the application or a function of the application, but does not forbid a user in a non-specified seat from using the application or the function of the application. In other words, for a same application or a same function of a same application, users at different seats have different use permission.

In a second possible implementation, the display may include a first display area and a second display area. The first display area is a display area that is in the two display areas and that is close to a driver seat, or a distance between the first display area and the driver seat is less than a distance between the second display area and the driver seat. In this case, if the terminal device determines that the target event belongs to the plurality of disabled events, and the display position of the target application or the target function of the target application on the display is the first display area, the terminal device may also forbid execution of the target event. If the display position of the target application or the target function of the target application on the display is the second display area, the terminal device may execute the target event.

Further, the display may include a first display window and a second display window. The first display window may be a display window of the first display area, and the second display window may be a display window of the second display area. Optionally, positions of the first display window and the second display window are fixed, or positions of the first display window and the second display window are changeable (for example, the user may change the positions of the first display window and the second display window using a corresponding adjustment operation, so that the first display window is located in the second display area, and the second display window is located in the first display area). If the positions of the first display window and the second display window are fixed, the first display window located in the first display area is a display window that is in the two display windows and that is close to a driver seat. In this case, the first display window may be used as a display-disabled window. If the terminal device determines that the target event belongs to the plurality of disabled events, and the display position of the target application or the target function of the target application on the display is the first display window, the terminal device may forbid execution of the target event.

If the positions of the first display window and the second display window are changeable, the display window located in the first display area may be used as a display-disabled window. If the terminal device determines that the target event belongs to the plurality of disabled events, and the display position of the target application or the target function of the target application on the display is the display window in the first display area, the terminal device may forbid execution of the target event.

To be specific, in a scenario in which the display includes a plurality of display areas, the terminal device may not respond to an operation of the user on an application or a function of an application displayed in a specified display area, but respond to an operation of the user on a same application or different applications in a non-specified display area, or respond to an operation of the user on a same function or different functions of a same application in a non-specified display area. In other words, for a same application or different applications in different display areas, use permission of a same user may be different, and for a same function or different functions of a same application in different display areas, use permission of a same user may be different.

In a third possible implementation, if the terminal device determines that the target event belongs to the plurality of disabled events, and when the position of the target application or the target function of the target application on the display is a specified seat or the type of the display is a specified type, the terminal device may forbid execution of the target event. If the position of the target application or the target function of the target application on the display is a non-specified seat or the type of the display is a non-specified type, the terminal device may execute the target event.

In an embodiment, based on the position of the display for division, and the display may include a display on a front windshield, a display on a center console, a display in front of a driver seat, a display in front of a front passenger seat, a display in front of a rear seat, and the like. If the terminal device determines that the target event belongs to the plurality of disabled events, and the display on which the target application or the target function of the target application is located is the display on the front windshield, the display in front of the driver seat, or the display on the center console, the terminal may forbid execution of the target event.

In another embodiment, based on the type of the display for division, the display may include an in-vehicle display and a projection display. Optionally, the projection display may be an HUD. If the terminal device determines that the target event belongs to the plurality of disabled events, and the type of the display on which the target application or the target function of the target application is located is the HUD, the terminal forbids execution of the target event.

To be specific, in a scenario in which there are a plurality of displays, the terminal device may forbid an operation performed by the user on an application or a function of an application displayed on a specified display, but does not forbid an operation performed by the user on an application or a function of an application displayed on a non-specified display. In other words, a same user has different use permission for applications or functions of applications displayed on different displays.

Optionally, when the terminal device includes a plurality of displays, the terminal device may include at least one processor. In an implementation, one of the at least one processor controls display of the plurality of displays. In another implementation, different processors in the at least one processor control display of different displays in the plurality of displays.

In a fourth possible implementation, if the terminal device determines that the target event belongs to the plurality of disabled events and status information of the vehicle meets a first preset condition, the terminal device forbids execution of the target event. Optionally, when the terminal device determines that the status information of the vehicle does not meet the first preset condition, the terminal device may not forbid execution of the target event.

Optionally, in different states of the vehicle, ranges of applications that are forbidden to be executed by the terminal device may be different, and ranges of different functions of a same application that is forbidden to be executed may also be different. To be specific, for different states of the vehicle, use permission of a same application on the terminal device may be different, use permission of different applications may be different, use permission of a same function of a same application may be different, and use permission of different functions of a same application may be different.

In the foregoing described possible implementations, only a process in which the terminal device further determines, based on one piece of preset information, whether to forbid execution of the target event when the at least one piece of preset information includes the piece of preset information is used as an example for description. In actual application, the at least one piece of preset information may include a plurality of pieces of preset information, that is, the terminal device may determine, based on the plurality of pieces of preset information, whether to forbid execution of the target event. For example, the terminal device may forbid execution of the target event when each piece of information in the plurality of pieces of preset information meets a corresponding constraint. Details are not listed one by one in embodiments of this application.

In some of the foregoing embodiments, when the vehicle is in the driving state and the user in the vehicle starts the target application or the target function of the target application on the terminal device, the terminal device may forbid execution of the target event, and send the prompt information, to indicate the user in the vehicle that the target application or the target function of the target application is unavailable. This can improve user experience when driving safety is ensured. Similarly, when the vehicle is in the driving state and the user in the vehicle controls, using a corresponding operation, a function or a component that affects attention of the driver, for example, display brightness or a height of a display, audio volume, or light in the vehicle, the terminal device may not respond to the operation of the user, and send corresponding prompt information.

In some other embodiments, when the vehicle is in the driving state and the user in the vehicle starts the target application or the target function of the target application on the terminal device, the terminal device may further execute the target event in the voice mode, and send the prompt information, to indicate the user in the vehicle that the target application or the target function of the target application operates in the voice mode. Specifically, the application control information generated by the terminal device in S601 may further include a plurality of mode limitation events, and each mode limitation event is used to indicate one application, or is used to indicate one application and one function. Correspondingly, in S603, if the target event triggered by the user belongs to the plurality of mode limitation events, the terminal device executes the target event in the voice mode.

The application that operates in the voice mode may include a video playing application, an instant messaging application, an operation application, a reading application, or the like. A function of the application that operates in the voice mode may include a video call function, a dynamic display function, a character input function, a search function, or the like.

It should be noted that a specific process in which the terminal device determines whether to execute the target event in the voice mode is similar to the foregoing specific process of determining whether to forbid execution of the target event. For details, refer to the foregoing related description of how the terminal device determines whether to forbid execution of the target event. Details are not described herein again in embodiments of this application.

It should be noted that all related content of the steps in the method embodiments provided in FIG. 4 and FIG. 14 may be cited in the method embodiment provided in FIG. 19. Details are not described herein again in embodiments of this application.

FIG. 20 is a diagram of a structure of an application display apparatus according to an embodiment of this application. The apparatus includes a display unit 701, a receiving unit 702, and a first output unit 703.

The display unit 701 is configured to display identifiers of a plurality of objects in a travelling process of a vehicle, where the identifiers of the plurality of objects include an identifier of a first object, and the identifiers of the plurality of objects are identifiers of a plurality of applications or identifiers of a plurality of functions of a same application. The receiving unit 702 is configured to receive a first operation performed by a user in the vehicle on the identifier of the first object, where the first operation is used to trigger the terminal device to execute a first event, and the first event is starting the first object. The display unit 701 is further configured to skip responding to the first operation. Alternatively, the display unit 701 may display an identifier of only one object. In this specification, an example in which the identifiers of the plurality of objects are displayed is used for description.

Further, the first output unit 703 is configured to send first prompt information, where the first prompt information indicates that the first object is unavailable.

Optionally, the display unit 701 is further configured to display the identifier of the first object in a first preset manner, where the first preset manner indicates that the first object is unavailable. Alternatively, the display unit 701 is further configured to display the first prompt information. Alternatively, the first output unit 703 is further configured to play the first prompt information by using a voice.

In an example, the first object is a first application, and the first application includes a game application, a video playing application, an instant messaging application, or an operation application. In another example, the first object is a first function of a first application, and the first function includes a video call function, a dynamic display function, a character input function, a search function, or a pop-up display function.

Further, the identifiers of the plurality of objects further include an identifier of a second object. The receiving unit 702 is further configured to receive a second operation performed by the user on the identifier of the second object, where the second operation is used to trigger the terminal device to execute a second event, and the second event is starting the second object. The display unit 701 is further configured to respond to the second operation in a voice mode.

Further, the first output unit 703 is further configured to send second prompt information, where the second prompt information indicates that the second object operates in the voice mode.

Optionally, the display unit 701 is further configured to display the identifier of the second object in a second preset manner, where the second preset manner indicates that the second event is executed in the voice mode. Alternatively, the display unit 701 is further configured to display the second prompt information. Alternatively, the first output unit 703 is further configured to play the second prompt information by using a voice.

In an example, the second object is a second application, and the second application includes a video playing application, an instant messaging application, an operation application, or a reading application. In another example, the second application is a second function of a second application, and the second function includes a video call function, a dynamic display function, a character input function, or a search function.

Further, the display unit 701 is further configured to: when the user is a user in a driver seat and/or a user in a front passenger seat, skip responding to the first operation. And/or, the display unit 701 is further configured to: when a display area in which the identifier of the first object is located is close to or opposite to the driver seat, skip responding to the first operation. And/or, the display unit 701 is further configured to: when the display unit is a preset display, skip responding to the first operation. And/or, the display unit 701 is further configured to: when status information of the vehicle meets a first preset condition, skip responding to the first operation.

Further, the display unit 701 is further configured to: when the user is a user in a driver seat and/or a user in a front passenger seat, respond to the second operation in the voice mode. And/or, the display unit 701 is further configured to: when a display area in which the identifier of the second object is located is close to or opposite to the driver seat, respond to the second operation in the voice mode. And/or, the display unit 701 is further configured to: when the display unit is a preset display, respond to the second operation in the voice mode. And/or, the display unit 701 is further configured to: when status information of the vehicle meets a second preset condition, respond to the second operation in the voice mode.

Optionally, the preset display is a projection display. Optionally, the status information of the vehicle includes at least one of the following information: speed information, gear information, power supply information, and safety information.

Further, the identifiers of the plurality of objects further include an identifier of a third object. The receiving unit 702 is further configured to receive a third operation performed by the user on the identifier of the third object, where the third operation is used to trigger the terminal device to execute a third event, and the third event is starting the third object. The display unit 701 is further configured to respond to the third operation.

In an example, the third object is a third application, and the third application includes an audio playing application, a navigation application, a time or event reminder application, or a system application. In another example, the third object is a third function of a third application, and the third function includes a static display function or an audio playing function.

Optionally, the apparatus includes a processor, the display unit includes at least two displays, and the processor is configured to control the at least two displays.

It should be noted that all related content of the steps in the method embodiments provided in FIG. 4 and FIG. 14 may be cited in the apparatus embodiment provided in FIG. 20. Details are not described herein again in embodiments of this application.

In this embodiment of this application, when the vehicle is in a driving state and the user in the vehicle starts an application or a function of an application using the first operation, the terminal device does not perform an action of starting the application or starting the function of the application, or does not open the application or the function of the application. In this way, when the vehicle is in the driving state, the user in the vehicle (for example, a driver) cannot use the application or the function of the application, to avoid a driving safety problem caused by excessive use of the application on the terminal device by the user.

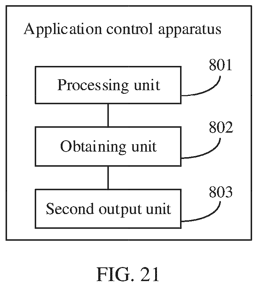

FIG. 21 is a diagram of a structure of an application control apparatus according to an embodiment of this application. The apparatus is applied to an in-vehicle terminal. The apparatus includes a processing unit 801, an obtaining unit 802, and a second output unit 803.

The processing unit 801 is configured to determine an application control strategy based on status information of a vehicle, where the application control strategy includes a plurality of disabled events, and each of the plurality of disabled events is used to indicate one application and one head unit service of the application. The obtaining unit 802 is configured to obtain a target event triggered by a user, where the target event is used to indicate a target application and a target head unit service of the target application. The processing unit 801 is further configured to: when the target event belongs to the plurality of disabled events, forbid execution of the target event.

Further, when the target event belongs to the plurality of disabled events, the second output unit 803 is configured to output prompt information, where the prompt information indicates the user that execution of the target event is forbidden.

Further, at least one head unit service is a dynamic display service. Optionally, the at least one head unit service includes at least one of the following: scrolling display, video playing, keyboard display, and pop-up display.

Further, the in-vehicle terminal has a plurality of system windows, and each system window displays one or more applications. Each of the plurality of disabled events is further used to indicate a system window in which the application is located, and the target event is further used to indicate a target system window in which the target application is located. Optionally, display positions of the plurality of system windows are fixed.

Further, the in-vehicle terminal has a plurality of display areas, and positions of the plurality of system windows in the plurality of display areas are not fixed. Each of the plurality of disabled events is further used to indicate a display-forbidden area of a system window in which the application is located, and the target event is further used to indicate a display area in which the target system window is located.

Further, the obtaining unit 802 is further configured to obtain the status information of the vehicle and configuration information, where the configuration information indicates at least one of the following: at least one head unit service, at least one system window, and at least one display-forbidden area. The processing unit is further configured to generate the application control strategy based on the status information of the vehicle, the configuration information, and a plurality of applications installed on the in-vehicle terminal. Optionally, the status information of the vehicle includes at least one of the following: speed information, gear information, power supply information, and safety information.

An embodiment of this application further provides another application control apparatus. For a diagram of a structure of the apparatus, refer to FIG. 21. The apparatus is applied to an in-vehicle terminal. The in-vehicle terminal has a plurality of system windows, and one or more applications are installed in each system window. In the apparatus, the processing unit 801 is configured to determine an application control strategy based on status information of a vehicle, where the application control strategy includes a plurality of disabled events, and each of the plurality of disabled events is used to indicate one application and a system window in which the application is located. The obtaining unit 802 is configured to obtain a target event triggered by a user, where the target event is used to indicate a target application and a target system window in which the target application is located. The processing unit 801 is further configured to: when the target event belongs to the plurality of disabled events, forbid execution of the target event. Optionally, display positions of the plurality of system windows are fixed.

Further, the in-vehicle terminal has a plurality of display areas, and positions of the plurality of system windows in the plurality of display areas are not fixed. Each of the plurality of disabled events is further used to indicate a display-forbidden area of a system window in which the application is located, and the target event is further used to indicate a display area in which the target system window is located.

Further, the obtaining unit 802 is further configured to obtain the status information of the vehicle and configuration information, where the configuration information indicates at least one of the following: at least one system window and at least one display-forbidden area. The processing unit 801 is further configured to generate the application control strategy based on the status information of the vehicle, the configuration information, and a plurality of applications installed on the in-vehicle terminal.

Optionally, the status information of the vehicle includes at least one of the following: speed information, gear information, power supply information, and safety information.

Further, when the target event belongs to the plurality of disabled events, the second output unit 803 is further configured to output prompt information, where the prompt information indicates the user that execution of the target event is forbidden.

It should be noted that all related content of the steps in the method embodiment provided in FIG. 19 may be cited in the apparatus embodiment provided in FIG. 21. Details are not described herein again in embodiments of this application.

In this embodiment of this application, when the vehicle is in a driving state and the user in the vehicle starts an application or a function of an application using the first operation, the terminal device forbids starting of the application or the function of the application. In this way, when the vehicle is in the driving state, the user in the vehicle (for example, a driver) cannot use the application or the function of the application, to avoid a driving safety problem caused by excessive use of the application on the terminal device by the user.

According to another aspect of this application, a terminal device is provided. The terminal device includes a processor and a memory. The memory stores instructions. When the instructions are run on the processor, the terminal device is enabled to perform the application display method provided in FIG. 4.

According to another aspect of this application, a terminal device is provided. The terminal device includes a processor and a memory. The memory stores instructions. When the instructions are run on the processor, the terminal device is enabled to perform the application display method provided in FIG. 14.

According to another aspect of this application, a terminal device is provided. The terminal device includes a processor and a memory. The memory stores instructions. When the instructions are run on the processor, the terminal device is enabled to perform the application control method provided in FIG. 19.

According to another aspect of this application, an in-vehicle terminal is provided. The in-vehicle terminal includes at least one processor and at least one display. The at least one processor is configured to control display of the at least one display, to perform the method provided in FIG. 4, FIG. 14, or FIG. 19.

An embodiment of this application further provides a chip system. The chip system may be applied to the terminal device in the foregoing embodiments. The chip system includes at least one processor and at least one interface circuit. The processor may be a processor in the foregoing terminal device. The processor and the interface circuit may be interconnected through a line. The processor may receive computer instructions from a memory of the terminal device through the interface circuit, and execute the computer instructions. When the computer instructions are executed by the processor, the terminal device is enabled to perform steps performed by the mobile phone or the tablet computer in the foregoing embodiments. Certainly, the chip system may further include another discrete component. This is not specifically limited in embodiments of this application.

According to another aspect of this application, a computer-readable storage medium is provided. The computer-readable storage medium stores a computer program or instructions. When the computer program or the instructions are run, the method provided in FIG. 4 is implemented.

According to another aspect of this application, a computer-readable storage medium is provided. The computer-readable storage medium stores a computer program or instructions. When the computer program or the instructions are run, the method provided in FIG. 14 is implemented.

According to another aspect of this application, a computer-readable storage medium is provided. The computer-readable storage medium stores a computer program or instructions. When the computer program or the instructions are run, the method provided in FIG. 19 is implemented.

According to another aspect of this application, a computer program product is provided. The computer program product includes a computer program (which may also be referred to as code or instructions). When the computer program is run, a computer is enabled to perform the application display method provided in FIG. 4.

According to another aspect of this application, a computer program product is provided. The computer program product includes a computer program (which may also be referred to as code or instructions). When the computer program is run, a computer is enabled to perform the application display method provided in FIG. 14.

According to another aspect of this application, a computer program product is provided. The computer program product includes a computer program (which may also be referred to as code or instructions). When the computer program is run, a computer is enabled to perform the application control method provided in FIG. 19.

The foregoing descriptions about implementations allow a person skilled in the art to understand that, for the purpose of convenient and brief description, division into the foregoing functional modules is used as an example for illustration. In actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objective of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the part essentially contributing to the technical solutions in embodiments of this application or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It should be finally noted that the foregoing descriptions are merely specific implementations of this application. However, the protection scope of this application is not limited thereto. Any variation or replacement within the technical scope disclosed in this application shall fall within the protection scope of this application. Therefore, the protection scope of this application shall be subject to the protection scope of the claims.

## Claims

1. An application display method, wherein the method comprises:
displaying, by a terminal device, an identifier of a first object in a travelling process of a vehicle, wherein the identifier of the object is an identifier of an application or an identifier of a function of an application;
receiving a first operation performed by a user in the vehicle on the identifier of the first object, wherein the first operation is used to trigger the terminal device to execute a first event, and the first event is starting the first object; and
sending, by the terminal device, first prompt information, wherein the first prompt information indicates that the first object is unavailable.

2. The method according to claim 1, wherein the sending, by the terminal device, first prompt information comprises:
displaying, by the terminal device, the identifier of the first object in a first preset manner, wherein the first preset manner indicates that the first object is unavailable; or
displaying, by the terminal device, the first prompt information; or
playing, by the terminal device, the first prompt information by using a voice.

3. The method according to claim 1 or 2, wherein the first object is a first application, and the first application comprises a game application, a video playing application, an instant messaging application, or an operation application; or the first object is a first function of a first application, and the first function comprises a video call function, a dynamic display function, a character input function, a search function, or a pop-up display function.

4. The method according to any one of claims 1 to 3, wherein the terminal device further displays an identifier of a second object, and the method further comprises:
receiving a second operation performed by the user on the identifier of the second object, wherein the second operation is used to trigger the terminal device to execute a second event, and the second event is starting the second object; and
responding, by the terminal device, to the second operation in a voice mode.

5. The method according to claim 4, wherein the method further comprises:
sending, by the terminal device, second prompt information, wherein the second prompt information indicates that the second object operates in the voice mode.

6. The method according to claim 5, wherein the sending, by the terminal device, second prompt information comprises:
displaying, by the terminal device, the identifier of the second object in a second preset manner, wherein the second preset manner indicates that the second event is executed in the voice mode; or
displaying, by the terminal device, the second prompt information on a display; or
playing, by the terminal device, the second prompt information by using a voice.

7. The method according to any one of claims 4 to 6, wherein the second object is a second application, and the second application comprises a video playing application, an instant messaging application, an operation application, or a reading application; or the second application is a second function of a second application, and the second function comprises a video call function, a dynamic display function, a character input function, or a search function.

8. The method according to any one of claims 1 to 7, wherein the method further comprises:
when the terminal device determines that the user is a user in a driver seat and/or a user in a front passenger seat, skipping, by the terminal device, responding to the first operation; and/or
when the terminal device determines that a display area in which the identifier of the first object is located is close to or opposite to the driver seat, skipping, by the terminal device, responding to the first operation; and/or
when the terminal device determines that a display on which the identifier of the first object is located is a preset display, skipping, by the terminal device, responding to the first operation; and/or
when the terminal device determines that status information of the vehicle meets a first preset condition, skipping, by the terminal device, responding to the first operation.

9. The method according to any one of claims 4 to 7, wherein the responding, by the terminal device, to the second operation in a voice mode comprises:
when the terminal device determines that the user is a user in a driver seat and/or a user in a front passenger seat, responding, by the terminal device, to the second operation in the voice mode; and/or
when the terminal device determines that a display area in which the identifier of the second object is located is close to or opposite to the driver seat, responding, by the terminal device, to the second operation in the voice mode; and/or
when the terminal device determines that a display on which the identifier of the second object is located is a preset display, responding, by the terminal device, to the second operation in the voice mode; and/or
when the terminal device determines that status information of the vehicle meets a second preset condition, responding, by the terminal device, to the second operation in the voice mode.

10. The method according to claim 8 or 9, wherein the preset display is a projection display.

11. The method according to any one of claims 8 to 10, wherein the status information of the vehicle comprises at least one of the following information: speed information, gear information, power supply information, and safety information.

12. The method according to any one of claims 1 to 11, wherein the terminal device further displays an identifier of a third object, and the method further comprises:
receiving a third operation performed by the user on the identifier of the third object, wherein the third operation is used to trigger the terminal device to execute a third event, and the third event is starting the third object; and
responding, by the terminal device, to the third operation.

13. The method according to claim 12, wherein the third object is a third application, and the third application comprises an audio playing application, a navigation application, a time or event reminder application, or a system application; or the third object is a third function of a third application, and the third function comprises a static display function or an audio playing function.

14. The method according to any one of claims 1 to 13, wherein the terminal device comprises a processor and at least two displays, and the processor is configured to control the at least two displays.

15. An application display apparatus, wherein the apparatus comprises:
a display unit, configured to display an identifier of a first object in a travelling process of a vehicle, wherein the identifier of the object is an identifier of an application or an identifier of a function of an application;
a receiving unit, configured to receive a first operation performed by a user in the vehicle on the identifier of the first object, wherein the first operation is used to trigger a terminal device to execute a first event, and the first event is starting the first object; and
an output unit, configured to send first prompt information, wherein the first prompt information indicates that the first object is unavailable.

16. The apparatus according to claim 15, wherein
the display unit is further configured to display the identifier of the first object in a first preset manner, wherein the first preset manner indicates that the first object is unavailable; or
the display unit is further configured to display the first prompt information; or
the output unit is further configured to play the first prompt information by using a voice.

17. The apparatus according to claim 15 or 16, wherein the first object is a first application, and the first application comprises a game application, a video playing application, an instant messaging application, or an operation application; or the first object is a first function of a first application, and the first function comprises a video call function, a dynamic display function, a character input function, a search function, or a pop-up display function.

18. The apparatus according to any one of claims 15 to 17, wherein
the display unit is further configured to display an identifier of a second object;
the receiving unit is further configured to receive a second operation performed by the user on the identifier of the second object, wherein the second operation is used to trigger the terminal device to execute a second event, and the second event is starting the second object; and
the display unit is further configured to respond to the second operation in a voice mode.

19. The apparatus according to claim 18, wherein the apparatus further comprises:
the output unit, configured to send second prompt information, wherein the second prompt information indicates that the second object operates in the voice mode.

20. The apparatus according to claim 19, wherein
the display unit is further configured to display the identifier of the second object in a second preset manner, wherein the second preset manner indicates that the second event is executed in the voice mode;
the display unit is further configured to display the second prompt information; or
the output unit is further configured to play the second prompt information by using a voice.

21. The apparatus according to any one of claims 18 to 20, wherein the second object is a second application, and the second application comprises a video playing application, an instant messaging application, an operation application, or a reading application; or the second application is a second function of a second application, and the second function comprises a video call function, a dynamic display function, a character input function, or a search function.

22. The apparatus according to any one of claims 15 to 21, wherein the display unit is further configured to:
when the user is a user in a driver seat and/or a user in a front passenger seat, skip responding to the first operation; and/or
when a display area in which the identifier of the first object is located is close to or opposite to the driver seat, skip responding to the first operation; and/or
when the display unit is a preset display, skip responding to the first operation; and/or
when status information of the vehicle meets a first preset condition, skip responding to the first operation.

23. The apparatus according to any one of claims 18 to 21, wherein the display unit is further configured to:
when the user is a user in a driver seat and/or a user in a front passenger seat, respond to the second operation in the voice mode; and/or
when a display area in which the identifier of the second object is located is close to or opposite to the driver seat, respond to the second operation in the voice mode; and/or
when the display unit is a preset display, respond to the second operation in the voice mode; and/or
when status information of the vehicle meets a second preset condition, respond to the second operation in the voice mode.

24. The apparatus according to claim 22 or 23, wherein the preset display is a projection display.

25. The apparatus according to any one of claims 22 to 24, wherein the status information of the vehicle comprises at least one of the following information: speed information, gear information, power supply information, and safety information.

26. The apparatus according to any one of claims 15 to 25, wherein
the display unit is further configured to display an identifier of a third object;
the receiving unit is further configured to receive a third operation performed by the user on the identifier of the third object, wherein the third operation is used to trigger the terminal device to execute a third event, and the third event is starting the third object; and
the display unit is further configured to respond to the third operation.

27. The apparatus according to claim 26, wherein the third object is a third application, and the third application comprises an audio playing application, a navigation application, a time or event reminder application, or a system application; or the third object is a third function of a third application, and the third function comprises a static display function or an audio playing function.

28. The apparatus according to any one of claims 15 to 27, wherein the apparatus comprises a processor, the display unit comprises at least two displays, and the processor is configured to control the at least two displays.

29. A terminal device, wherein the terminal device comprises a processor and a memory, the memory stores instructions, and when the instructions are run on the processor, the terminal device is enabled to perform the application display method according to any one of claims 1 to 14.

30. An in-vehicle terminal, wherein the in-vehicle terminal comprises a processor and a display, and the processor is configured to control the display to perform the application display method according to any one of claims 1 to 14.

31. A computer-readable storage medium, wherein the computer-readable storage medium stores a computer program or instructions, and when the computer program or the instructions are run, the application display method according to any one of claims 1 to 14 is implemented.
